# FASCICULE DE BREVET EUROPEEN

(11) **EP 0 543 683 B1**
(45) Date de publication et mention de la délivrance du brevet: **08.01.1997**
(21) Numéro de dépôt: 92401818.7
(22) Date de dépôt: 26.06.1992
(51) Int. Cl.: H01H 33/12, H01H 33/66

(54) **Disjoncteur auto-sectionneur à moyenne tension et application à une cellule et à un poste à moyenne tension**
Mittelspannungs-Lasttrennschalter und Verwendung in einer Mittelspannungszelle und Mittelspannungspost
Middle voltage load break switch and application to a middle voltage cell and a middle voltage post

(30) Priorité: 20.11.1991 FR 9114311
(43) Date de publication de la demande: 26.05.1993
(73) Titulaire: GEC ALSTHOM SA, 75116 Paris (FR)
(72) Inventeur: Rozier, Paul, F-71530 Chalon Sur Saone (FR)
(74) Mandataire: Fournier, Michel

(56) Documents cités:
- EP-A- 0 094 858
- EP-A- 0 405 253
- DE-U- 1 870 065
- FR-A- 1 533 266
- GB-A- 1 189 249
- US-A- 3 751 617
- US-A- 3 813 506

## Description

La présente invention est relative à un disjoncteur auto-sectionneur selon le préambule de la revendication 1, utilisable en moyenne tension jusqu'à 36 kV, avec extensions possibles jusqu'à 72 kV,et à son application aux cellules et aux postes à moyenne tension, intérieurs ou extérieurs.

On appelle disjoncteur auto-sectionneur un appareil électrique ayant un pouvoir de coupure de disjoncteur et qui, lorsqu'il est en position isolée, présente entre ses bornes une tenue diélectrique entre entrée et sortie égale ou supérieure à celle qui est exigée pour les sectionneurs. Un tel appareil peut donc remplacer trois fonctions d'appareillage, ce qui est particulièrement avantageux pour l'exploitant, tant en raison de l'économie réalisée en investissement (moindre coût, plus faible encombrement au sol) que par les économies d'entretien au cours de l'exploitation.

On connaît, par le brevet français n° 1 533 266, sur lequel se fonde le préambule de la revendication 1, une cellule blindée comprenant pour chaque phase un appareil de coupure rotatif, la rotation de l'appareil autour d'un axe situé dans un plan de symétrie vertical de la cellule assurant son propre sectionnement.

Un tel appareil n'a pu être construit industriellement en raison de l'encombrement important et du poids des appareils de coupure du type étanche à fluide ininflammable envisagés, en particulier les disjoncteurs à hexafluorure de soufre (SF6). Un autre handicap résulte de la longueur de course des disjoncteurs à SF6 qui pénalise le type d'appareil précité par la longueur excessive qu'il faudrait leur donner.

Un premier but de l'invention est de réaliser un disjoncteur auto-sectionneur multipolaire de faible poids et de faible encombrement dans toutes ses dimensions, donc aisément logeable dans une cellule et facilement manoeuvrable sans nécessiter une grande énergie de manoeuvre.

Un autre but de l'invention est de réaliser un disjoncteur auto-sectionneur de faible prix de revient.

Un autre but de l'invention est de réaliser un disjoncteur auto-sectionneur dans lequel les éléments relatifs aux divers pôles, en général trois pôles pour un appareil triphasé, peuvent être placés dans un même tiroir extractible dans une cassette d'une cellule, avec un accès frontal aisé aux câbles de départ et au jeu de barres du poste constitué par la juxtaposition de plusieurs cellules.

Un autre but de l'invention est de réaliser un disjoncteur auto-sectionneur facilement visitable, et permettant une interchangeabilité des éléments d'un pôle ou un remplacement aisé d'un pôle complet.

Un autre but de l'invention est de réaliser une cellule à moyenne tension munie du disjoncteur auto-sectionneur de l'invention, ladite cellule moyenne tension permettant la coupure, le sectionnement amont et aval et la détection du courant pour assurer la protection contre les court-circuits, ladite cellule comportant tous les éléments nécessaires au support des jeux de barres, à l'ancrage des câbles, à la mise à la terre visible avec l'indication visible de la présence tension, à la séparation entre les compartiments câbles et jeux de barres, à la manoeuvre des fonctions disjoncteur et sectionneur et à l'extraction pour visite exceptionnelle du disjoncteur auto-sectionneur.

Un but de l'invention est de réaliser une cellule du type précité ayant un encombrement au sol notablement inférieur à celui des cellules analogues de l'art antérieur.

Un autre but de l'invention est de réaliser une cellule du type précité dans laquelle les risques de défauts entre phases sont très réduits.

Un autre but de l'invention est de réaliser un poste à moyenne tension de construction économique, dans lequel les risques d'apparition d'un défaut entre phases sont extrêmement réduits et dans lequel les risques de propagation et d'évolution d'un défaut, à la terre, sont très faibles.

L'invention a pour objet un disjoncteur auto-sectionneur multipolaire comprenant pour chaque pâle une traversée isolante enfermant une ampoule à vide comprenant un contact fixe et un contact mobile, la traversée comportant à une première extrémité un premier contact relié à une première borne de l'ampoule et destiné à coopérer avec un conducteur d'arrivée, et à une seconde extrémité un second contact relié à une seconde borne de l'ampoule et destiné à coopérer avec un conducteur de départ, caractérisé en ce que les traversées sont fixées à un profilé métallique le long et à l'abri duquel est placé un arbre de manoeuvre commun aux ampoules et actionné par une commande de manoeuvre des contacts mobiles des ampoules contenue dans un coffret solidaire du profilé, ce dernier étant monte mobile en rotation autour de sa propre direction pour assurer la fonction sectionnement.

Dans un mode particulier de réalisation, chaque pâle comprend une traversée isolante comprenant une première partie contenant une ampoule à vide, ladite ampoule à vide comportant une enveloppe isolante fermée par un premier et un second flasques métalliques, le premier flasque métallique portant extérieurement à l'enveloppe une première mâchoire de contact et à l'intérieur de l'enveloppe ledit contact fixe, le deuxième flasque étant traversé de manière étanche par une tige métallique mobile portant ledit contact mobile, la traversée isolante comprenant une seconde partie cylindrique à l'intérieur de laquelle est disposé de manière coaxiale un tube métallique mécaniquement relié à l'ampoule à vide et électriquement relié à ladite tige métallique mobile, ledit tube contenant une tige de manoeuvre reliée à ladite tige métallique mobile, les traversées isolantes de chaque pôle étant fixées audit profilé en équerre disposé sensiblement à la limite entre la première et la seconde partie de chaque traversée, la tige de manoeuvre de chaque pôle étant reliée mécaniquement audit arbre de commande par l'intermédiaire d'un levier articulé sur une pièce d'extrémité solidaire du tube métallique, d'un bras isolant articulé par une première extrémité audit levier et par une seconde extrémité à une bielle calée sur ledit arbre, ladite pièce d'extrémité étant mécaniquement et électriquement reliée audit tube métallique et constituant une seconde mâchoire de contact.

L'invention a également pour objet une cellule à moyenne tension, caractérisée en ce qu'elle comprend au moins un disjoncteur auto-sectionneur du type précité.

L'invention est précisée par la description d'un exemple de mise en oeuvre, en référence au dessin annexé dans lequel:
- la figure 1 est une vue schématique en perspective d'un disjoncteur auto-sectionneur triphasé selon l'invention,
- la figure 2 est une vue en coupe axiale d'un pôle du disjoncteur auto-sectionneur selon l'invention,
- la figure 3 est une vue partielle en coupe axiale d'un pôle selon une variante de réalisation,
- la figure 4 représente, de manière agrandie, les dispositions pour relier mécaniquement et électriquement le tube métallique et l'ampoule à vide,
- la figure 5 est une vue en coupe selon la ligne A-A de la figure 2,
- la figure 5A est une vue en élévation en coupe d'un dispositif de rattrapage de jeu pour la commande des contacts de l'ampoule,
- la figure 5B est une vue en élévation d'un pôle selon une variante de réalisation de l'invention,
- la figure 5C montre la réalisation d'un "flambeau" lors du montage d'un pôle du disjoncteur auto-sectionneur,
- la figure 5D est une vue en élévation en coupe axiale d'un pôle selon une autre variante de réalisation du disjoncteur auto-sectionneur,
- la figure 5E est une vue en perspective d'une variante de réalisation des moyens de manoeuvre des ampoules à vide des pôles,
- la figure 6 est une vue en élévation d'un disjoncteur auto-sectionneur selon l'invention, équipé de son tiroir et placé dans un caisson fixé à une charpente, le disjoncteur auto-sectionneur étant représenté en position sectionneur fermé,
- la figure 7 est une vue analogue à la précédente, le disjoncteur auto-sectionneur étant représenté en position sectionneur ouvert,
- la figure 8 représente schématiquement en perspective une cellule , avec le tiroir ouvert,
- la figure 9 représente la même cellule, avec le tiroir fermé,
- la figure 10 représente le mécanisme de manoeuvre de sectionnement du disjoncteur auto-sectionneur de l'invention,
- la figure 10A est une vue de côté du volet de protection coulissant et de son mécanisme de manoeuvre,
- la figure 10B est une vue de dessus du même mécanisme,
- la figure 10C est une vue en perspective des volets de protection selon une variante de réalisation,
- la figure 10D est une vue de côté des volets de la figure 10,
- la figure 11 est un schéma expliquant le mécanisme de manoeuvre de la partie disjoncteur du disjoncteur auto-sectionneur de l'invention,
- la figure 12 est une vue en élévation de côté d'une cellule à deux jeux de barres et un départ utilisant deux disjoncteurs auto-sectionneurs selon l'invention,
- la figure 13 montre l'association en parallèle de deux pôles selon l'invention pour doubler l'intensité du courant,
- la figure 14 montre une cellule de protection de moteur, réalisée à partir d'un disjoncteur auto-sectionneur selon l'invention, et accouplée à une cellule du type de la figure 7,
- la figure 15 représente une cellule classique de protection de câbles,
- la figure 16 représente une cellule de protection de câbles réalisée au moyen du disjoncteur auto-sectionneur de l'invention,
- la figure 17 est un schéma d'une cellule de protection générale d'un poste d'abonné moyenne tension/basse tension selon l'art connu,
- la figure 18 représente, en vue de face, une cellule de protection générale d'un poste d'abonné moyenne tension/basse tension utilisant un disjoncteur auto-sectionneur selon l'invention,
- la figure 19 représente la même cellule vue de côté,
- la figure 20 représente en élévation de face une cellule spécialement conçue pour la protection des jeux de barres contre les risques de propagation des arcs et comportant un disjoncteur auto-sectionneur selon l'invention,
- la figure 21 est une vue en coupe axiale d'une portion de traversée d'un pôle d'un disjoncteur auto-sectionneur selon une variante de réal isation à deux ampoules à vide par pôle,
- la figure 22 est un schéma d'un poste équipé d'un disjoncteur shunt selon l'art connu,
- la figure 23 est un schéma d'un poste ayant les mêmes fonctions que le poste de la figure 22, mais équipé de disjoncteurs auto-sectionneur selon l'invention,
- la figure 24 représente une cellule moyenne tension assurant la fonction mise à la terre intégrale et utilisant des disjoncteurs auto-sectionneurs selon l'invention,
- la figure 25 représente un étrier utilisé pour la mise à la terre intégrale,
- la figure 26 représente une cellule comportant deux cassettes contenant chacune un disjoncteur auto-sectionneur selon l'invention,
- la figure 27 représente une vue de côté d'un groupe de deux cellules ayant chacune deux disjoncteurs auto-sectionneurs selon l'invention
- la figure 28 est une vue de dessus du même groupe
- la figure 29 est une vue en coupe de face d'un poste à moyenne tension équipé de disjoncteurs auto-sectionneurs selon l'invention,
- la figure 30 est une vue en coupe de côté du même poste.

La figure 1 représente schématiquement en perspective un disjoncteur auto-sectionneur triphasé selon l'invention.

Les pôles du disjoncteur-sectionneur sont référencés 1, 2 et 3; ils fixés à un profilé métallique commun 4, de préférence en équerre, le long et à l'abri duquel est placé un arbre de commande 38 des pôles.

Le profilé 4 est au potentiel de la terre; comme on le verra en détail plus loin, le profilé peut tourner sur lui-même pour assurer la fonction sectionnement de l'appareil; le profilé est solidaire d'un coffret de commande 5 de la fonction disjoncteur de l'appareil à l'intérieur duquel pénètre l'arbre 38.

L'ensemble constitué par le profilé et les pôles est parfaitement équilibré, de sorte que la manoeuvre de sectionnement précité n'exige qu'une faible énergie.

La figure 2 est une vue en coupe axiale d'un pôle, par exemple le pôle 1. Bien entendu, les pôles sont rigoureusement identiques et interchangeables.

Le pôle comprend une traversée isolante 10, en résine ou en élastomère, munie d'ailettes 11. Dans un mode particulier de réalisation, les ailettes sont rapportées; en variante, elle viennent de moulage avec la traversée.

Une première partie 10A de la traversée a une forme tubulaire et contient une ampoule à vide 14 représentée schématiquement.

L'ampoule à vide comprend une enveloppe isolante 15, de préférence en céramique, et deux plaques métalliques d'extrémité ou flasques 16 et 17. A la plaque 16 est fixée d'un côté une tige 19 portant un contact fixe 18 et de l'autre côté une première mâchoire de connexion 20.

L'ampoule à vide comprend un contact mobile 21 porté par une tige métallique 22 coulissant de manière étanche à travers la plaque 17 grâce à un soufflet d'étanchéité 23.

La surface intérieure de la partie 10A de la traversée est munie de rainures 12 parallèles à l'axe de la traversée et servantde canaux de ventilation, comme il sera expliqué plus loin.

On notera que les dimensions de la partie 10A de la traversée et en particulier son diamètre intérieur et sa profondeur intérieure sont choisis de préférence pour permettre de loger les ampoules à vide ayant les plus grandes dimensions. Si on veut loger une ampoule de plus petites dimensions, on interposera, comme il est montré dans la figure 3, entre l'intérieur de la traversée 10A et l'ampoule à vide 14, une cage cylindrique 13, en matériau isolant tel que la résine, munie de rainures extérieures 13A définissant avec la surface latérale de l'ampoule à vide des canaux de ventilation.

En revenant à la figure 2, on voit que la traversée isolante comporte une seconde partie 10B, également tubulaire, mais de diamètre plus petit que celui de la partie 10A et raccordée à cette dernière par un congé 10C. La surface intérieure de la partie 10B est conique, l'épaisseur de la traversée augmentant à partir du congé 10C et au fur et à mesure qu'on s'en éloigne. Bien entendu, les parties 10A, 10B et 10C ne constituent qu'une seule et même pièce venue de moulage. La partie 10B contient un tube métallique 25, de préférence en cuivre, solidarisé à l'ampoule à vide comme on le montrera en référence à la figure 5, et en contact électrique avec la tige mobile 22 de l'ampoule à vide. Le tube 25 sert à acheminer le courant entre l'ampoule à vide et une pièce complexe 26 servant en particulier de seconde mâchoire de connexion de l'appareil.

La tenue diélectrique entre la traversée 10B et le tube métallique 25 est assurée au moyen d'une gaine 27, en matériau isolant tel que le latex, et présentant une forme générale tubulaire à section intérieure cylindrique et à surface extérieure conique et complémentaire de la surface intérieure de la partie 10B de la traversée isolante. Au montage, cette gaine est glissée autour du tube métallique 25, le glissement étant facilité par l'emploi d'une graisse isolante par exemple à base de silicone. Puis la surface extérieure de la gaine est enduite de la même graisse et engagée dans la partie 10B de la traversée isolante, en exerçant une pression de manière à assurer l'élimination d'air. Le maintien en compression de la gaine est assuré grâce à un moyen d'arrêt tel qu'un circlips 28 engagé dans une rainure du tube 25.

Le pôle est fixé au profilé métallique 4 au moyen d'un collier de fixation 29.

La manoeuvre d'ouverture ou de fermeture de l'ampoule à vide est assurée au moyen d'une tige 30, par exemple métallique, fixée par exemple par vissage à la tige 22. Cette tige est articulée en 31 à un levier de renvoi 32 lui-même articulé en 33 sur la pièce 26. L'extrémité du levier est articulé en 34 à une première extrémité d'une tringle isolante 35 dont la seconde extrémité est articulée en 36 à une première extrémité d'une bielle 37 dont une seconde extrémité est calée sur l'arbre de commande 38 placé le long du profilé 4.

Le tube de cuivre 25 porte, au voisinage de la plaque 17, des trous 25A dont le rôle est expliqué maintenant.

Lors du passage du courant nominal dans l'ampoule à vide, celle-ci subit un échauffement dû à l'effet Joule. Le refroidissement de l'ampoule est assuré par une circulation d'air qui s'engage dans la pièce 26, traverse l'espace annulaire entre la tige de manoeuvre 30 et le tube 25, traverse les trous 25A et s'engage dans les rainures 12 de la partie 10A de la traversée. Ce circuit de ventilation est de toute première importance car il permet d'éliminer les risques de pollution et de condensation.

On se reportera à la figure 4 qui montre comment le tube métallique 25 est fixé mécaniquement à l'ampoule à vide 14 et comment le courant peut passer de la tige mobile 22 au tube 25.

Les ampoules à vide comprennent habituellement un capot métallique soudé à la plaque 17 et qui contient un palier pour la tige mobile 22. Pour les besoins de l'invention, le capot est modifié et transformé en un manchon 15A fileté intérieurement auquel on peut visser une bague métallique 15B. Le tube 25 est engagé à l'intérieur de cette bague et solidarisé à la bague par brasage ou vissage. La bague et le tube définissent alors un épaulement contre lequel s'appuie un contact de type accordéon ou une douille de contact 15C.

La forme et le rôle de la pièce 26 sont précisés en référence à la figure 5. On voit que la pièce 26 comprend deux demi-colliers 41 et 42 pouvant être serrés au moyen de vis 43, 44. Ces colliers enserrent l'extrémité du tube conducteur 25 avec une pression de contact suffisante pour assurer le passage du courant. Les demi-colliers, venant en butée contre l'extrémité de la partie 10B de la traversée, assurent ainsi l'immobilisation en translation axiale du tube 25 et de l'ampoule à vide 14 qui en est solidaire.

Des ergots 45 portés par les demi-colliers coopèrent avec des alvéoles à l'extrémité de la traversée 10B pour immobiliser le tube 25 et, par suite l'ampoule à vide 14, en rotation.

Deux des oreilles des colliers, 46 et 47, se prolongent pour constituer la seconde mâchoire 48 de contact de l'appareil.

La vis 44 sert d'articulation 33 pour le levier 32.

Les colliers portent une échancrure 49 pour permettre le montage de l'articulation 31.

On notera que la pièce 26 peut être modifiée pour permettre un contact électrique entre le pôle et un jeu de barres qui serait situé à la verticale du pôle. Par ailleurs, la pièce 26 peut recevoir deux capots métalliques en demi-coquille, non représentés, pour assurer à cette pièce une forme favorable du point de vue diélectrique.

Le pôle est complété par un capteur de courant 50, sous forme d'un bobinage à circuit magnétique torique; si les ailettes sont du type ailettes rapportées, le bobinage torique peut être fermé et glissé autour de la traversée 10B avant la pose des ailettes 11. Si les ailettes viennent de moulage avec la traversée, le circuit magnétique est du type ouvert.

L'extérieur de la traversée, au droit du tore 50 et du collier 29 de support de la poutre 4, est revêtu d'une métallisation 52 pour égaliser le potentiel qui est celui de la terre.

Le tore 50 peut être entouré d'un capot pare-effluves 51 maintenu en place par des moyens conventionnels non représentés.

On notera qu'en variante, le tore peut être placé à l'intérieur de l'enveloppe isolante, par surmoulage.

L'examen de la figure 2 montre la présence, entre le flasque 17 et la portion intermédiaire 10C de la traversée, d'un volume rempli par de l'air. Sans précautions particulières, ce volume serait l'objet d'un fort gradient de potentiel pouvant entraîner des décharges partielles qui à la longue peuvent être destructrices. Pour éviter cet inconvénient, la traversée comprend, au droit du volume précité, un grillage métallique 51A inséré lors du moulage de la traversée, et qui est mis au potentiel du tube métallique 25. De la sorte, les différences de potentiel sont appliquées sur les seules parties isolantes.

La tige de manoeuvre 30 peut comprendre un organe de rattrapage de jeu comportant une cage munie d'un ressort 53; cet organe de rattrapage de jeu peut aussi, en variante, être disposé en tout endroit convenable de la chaîne cinématique reliant la tige 22 et l'arbre de commande 38.

Cette cage pouvant dans certain cas être trop encombrante, il est possible de la remplacer par le dispositif décrit ci-après en référence à la figure 5A.

Au moins l'extrémité de la tige de commande 30 présente une portion tubulaire 30A dans laquelle s'engage l'extrémité de la tige mobile 22 de l'ampoule. La tige mobile métallique 22 comporte une lumière 22A dans laquelle est engagée une première goupille 22B traversant la tige 30. Un ressort 22C est disposé entre une première rondelle d'appui 22D en contact avec l'extrémité de la partie tubulaire 30A, et une seconde rondelle 22E engagée dans la tige 22 et maintenue par une seconde goupille 22F traversant la tige 22. En position de fermeture des contacts de l'ampoule, la tige 30 comprime le ressort 22C qui transmet sans jeu l'effort à la tige mobile 22. A l'ouverture, la tige 30 tire la tige 22. On notera que l'ensemble de rattrapage de jeu est guidé dans le tube conducteur 25 par les rondelles 22D et 22E d'appui du ressort. Les rondelles portent des trous ou échancrures à leur périphérie pour permettre le passage du flux d'air de refroidissement de l'ampoule.

On a indiqué que seule l'extrémité de la tige de commande était réalisée sous forme tubulaire; en variante, la tige de commande pourrait être un tube sur toute sa longueur.

L'arbre de commande 38 est fixé au profilé métallique 4 par des moyens connus non représentés, de manière à le laisser libre en rotation. L'arbre peut être protégé plus complètement au moyen d'un profilé en équerre non représenté, par exemple en plastique, clipsé sur le profilé métallique 4 de manière à définir une poutre creuse et mettre ainsi l'arbre 38 à l'abri de la poussière.

La figure 5B est une vue en élévation en coupe axiale d'un pôle selon une variante de réalisation de l'invention. Les éléments communs aux figures 2 et 5B ont reçu les mêmes numéros de référence. Le tube de cuivre 25 présente une partie supérieure 25B élargie par repoussage pour venir constituer la partie inférieure du logement de l'ampoule à vide; la tige de manoeuvre 30 est directement vissée au contact mobile 21 de l'ampoule à vide; le contact électrique entre la tige 22 de l'ampoule à vide et le tube 25 est assuré par un contact à lamelles 15D. La partie supérieure de la partie 10A de la traversée est fermée par une plaque 16A vissée par dès vis 16B coopérant avec des inserts venus de moulage avec la traversée isolante. La plaque 16A porte des lames 16C constituant à la fois le contact électrique de l'appareil et des éléments de refroidissement de l'ampoule à vide.

Lors du moulage de la traversée isolante 10, le tube 25 est placée comme un insert et se trouve dons parfaitement positionné par rapport à la matière isolante.

Pour le montage du pôle, on commence par réaliser un "flambeau" comprenant, comme le montre la figure 5C, l'ampoule à vide 14, la tige de manoeuvre 30 vissée au contact mobile de l'ampoule à vide, le contact a lamelles 15D, le dispositif de rattrapage de jeu 53 et la plaque de fermeture 16A. Ce flambeau est alors inséré dans l'enveloppe isolante 10. Il reste alors à fixer la pièce 26, le levier 32 et la tringle isolante 35.

La figure 5D illustre une variante de réalisation; les éléments communs à la figure 5D et aux figures 2 et 5B ont reçu les mêmes numéros de référence.

Le tube de cuivre 25' est de dimension courte et placé à la partie inférieure de la partie 10B de l'enveloppe isolante; il coopère avec un contact à lamelles 15D placé directement sur la tige mobile 22 de l'ampoule à vide. Le dispositif de rattrapage de jeu 53 est placé sur la tringle isolante 33.

On notera qu'en variante, l'enveloppe isolante peut être réalisée en céramique.

Dans les figures précédentes, on a vu que la manoeuvre des ampoules à vide se faisait grâce à la rotation de l'arbre de commande 38. La figure 5E illustre une variante de réalisation dans laquelle l'arbre 38 est animé d'un mouvement de translation appelé aussi tire-pousse. Ce mouvement est communiqué au levier 32 de manière connue, grâce par exemple à un levier 32A et à une bielle coudée 32B.

Les figures 6 à 9 illustrent le montage du disjoncteur auto-sectionneur de l'invention pour la réalisation d'une cellule d'un poste à moyenne tension.

Dans les figures 6 et 7, on distingue une charpente métallique 55vue en coupe; cette charpente est mise au potentiel de la terre par des moyens conventionnels non représentés; à cette charpente est fixée, par tous moyens non représentés, un caisson 55A contenant le disjoncteur auto-sectionneur de l'invention ainsi que divers éléments décrits ci-après: le caisson contient d'abord un tiroir 56 coulissant sur des glissières; le tiroir 56 présente deux faces opposées 56A et 56B sur lesquelles les extrémités du profilé métallique 4 sont montées en rotation. On rappelle que ce profilé peut tourner sur lui-même et qu'il estsolidaire du coffret de commande 5 représenté en traits tiretés dans la figure 6.

Le caisson porte à sa partie supérieure une console 57 portant des isolateurs 58 servant de support aux barres électriques 59 du poste. La charpente est fermée à sa partie supérieure par un couvercle 60 interdisant en service normal l'accès aux barres, mais qu'il suffit d'ôter pour avoir accès au compartiment barres.

Le caisson porte un premier volet fixe 61 qui interdit l'accès de la partie gauche du compartiment barres à partir de la face avant de la cellule. Le caisson porte des glissières 61A portant un volet 61B qui lorsque le disjoncteur auto-sectionneur est en service normal, reste à gauche de la figure (figure 6) et qui, lorsque le disjoncteur auto-sectionneur passe en position sectionnée (figure 7), se déplace automatiquement vers la droite de la figure pour interdire l'accès à la partie droite du compartiment barres à partir de la face avant de la cellule.

Le tiroir comprend un obturateur automatique pivotant 62 qui est rappelé en position par un ressort 63; en service normal (figure 6), ce volet sépare le compartiment barres du compartiment câbles; lors d'une manoeuvre de sectionnement, il assure la mise au potentiel de la terre de l'appareil en venant et restant en contact avec la mâchoire 20 (voir figure 7).

A la partie inférieure du caisson, on trouve un compartiment câbles, où chaque câble de départ 65 est relié à une borne 66 portée par un isolateur-support 67 pouvant servir également de détecteur de tension, celle-ci étant détectée au moyen de lampes témoins 68 placées à la base de l'isolateur-support 67.

Un écran pare-effluves 69 entoure partiellement la borne 66.

Une lame 70 pour chaque pôle permet la mise à la terre de la borne 66 lorsque le sectionneur est ouvert.

La fonction sectionneur est assurée de la manière suivante:
- en fonctionnement normal, le disjoncteur auto-sectionneur est dans la configuration représentée dans la figure 6, les mâchoires 20 et 48 étant en contact respectivement avec les barres 59 et les bornes 66.
- après déclenchement du disjoncteur, par action de la commande sur la tige 30 (voir figure 2), l'ensemble des pôles peut être basculé par rotation sur lui-même du profilé métallique 4, dans le sens indiqué par la flèche F (figure 6). L'appareil vient alors en position sectionnée (figure 7), avec respect des distances d'isolement, notamment la distance d entre les pare-effluves 51 et 69. Le coffret de commande 5 bascule en même temps que les pôles qui viennent se loger dans le tiroir. Cette disposition permet un sectionnement visible, évitant tout risque pour le personnel. La visualisation du sectionnement peut être accentuée au moyen d'une signalétique constituée par exemple par un tracé 5A de couleur visible. Un dispositif non représenté, mais bien connu, permet d'éviter l'extraction totale du tiroir, ce qui interdit l'accès aux compartiments barres. Le tiroir peut être tiré suffisamment (figure 8) pour permettre un accès total aux pôles en vue de leur entretien ou de leur remplacement. On note que la disposition des pôles n'autorise la refermeture du tiroir qu'en position sectionnée. On observera enfin que lorsque le tiroir est ouvert, les pôles du disjoncteur auto-sectionneur peuvent être replacés en position verticale, par rotation du profilé métallique 4, par exemple pour réaliser des essais d'enclenchement ou de déclenchement.

Pour constituer une cellule complète, on dispose la charpente 55 sur un caisson 72 pour le départ des câbles; par ailleurs, un caisson relayage 73 peut être placé au-dessus du caisson 55A, avec organes de visualisation et de réglage 74 disposés en face avant.

On notera que le caisson 55A contenant le tiroir avec les pôles du disjoncteur auto-sectionneur, les isolateurs, le sectionneur de terre et le dispositif de visualisation de la présence de tension peuvent être fabriqués,contrôlés et testés en usine et montés sur le site.

On rappelle que le profilé métallique 4, relié au coffret de commande, est au potentiel de la terre; comme les pôles du disjoncteur auto-sectionneur sont montés sur ce profilé commun, le risque d'amorçage entre phases est pratiquement inexistant.

Les capteurs de courant dont sont munis les pôles permettent de détecter un courant anormal de surcharge ou de court-circuit dans les pôles, et de commander l'ouverture du disjoncteur; le relais à maximum de courant à action directe et pour lequel il n'est pas nécessaire de disposer d'une source d'énergie auxiliaire, peut être placé dans le coffret de commande 5. En cas de claquage de la traversée au droit du profilé métallique, le capteur de courant détecte le défaut à la terre et provoque le déclenchement.

Le sectionnement par rotation du profilé métallique 4 solidaire du coffret de commande est normalement motorisé, mais il peut aussi être effectué manuellement.

La figure 10 illustre la motorisation de la fonction sectionnement du disjoncteur auto-sectionneur de l'invention.

Dans la figure, on distingue le profilé métallique 4, l'arbre de commande 38 des pôles et l'une des bielles 37; le pôle correspondant n'a pas été représenté par souci de clarté du dessin.

Le profilé 4 est maintenu par deux paliers à billes 75 et 76 solidaires respectivement des parois 56A et 56B du tiroir. Le coffret de commande est solidarisé au profilé 4, par exemple par soudage. Un pignon 77 est solidarisé au profilé 4. Un moteur 78, fixé à la paroi 56A du tiroir entraîne par une vis hélicoïdale 79, avec réduction de vitesse, le pignon 77, ce qui provoque la rotation du profilé 4 et du coffret 5, indépendamment du mouvement de l'arbre de commande 38. La motorisation du sectionnement qui vient d'être décrite montre que l'appareil peut être télécommandé et qu'il peut donc équiper les postes pour lesquels il n'est pas prévu de personnel de manoeuvre ou de surveillance.

Les figures 10A et 10B illustrent un mode de réalisation, donné à titre d'exemple non limitatif, d'un mécanisme de manoeuvre automatique du volet 61B.

Le caisson porte, comme il a déjà été mentionné, deux glissières 61A dans lesquelles peut coulisser le volet 61B, qui est une tôle rectangulaire.

Le caisson porte sur sa face arrière, un disque mobile 61C muni d'un trou central 61D de forme convenable pour recevoir le profilé 4 qui déborde du tiroir au-delà de la face 56B (voir figure 10) et permettre la rotation du disque lorsque le profilé 4 support des pôles tourne sur lui même lors d'une opération de sectionnement. Lorsque le profilé est une équerre, comme indiqué précédemment, le trou est avantageusement de forme carrée ou rectangulaire. Le volet est entraîné en translation par la rotation du disque au moyen de deux jeux d'embiellages coopérant avec un arbre 61 E parallèle au plan du volet et parallèle au profilé 4. L'arbre est fixé au caisson 55A au moyen de paliers non représentés. Il est entraîné en rotation par une bielle 61F articulée d'une part sur le disque 61C et d'autre part à une manivelle 61G calée sur l'arbre 61E. Le mouvement de rotation de l'arbre est converti en un mouvement de translation communiqué au volet au moyen de deux jeux d'embiellages. Seul l'un des jeux d'embiellages, celui du fond de tiroir, est décrit en détail, l'autre jeu, à l'avant du tiroir étant tout à fait identique. Le premier jeu d'embiellages comprend une bielle 61H calée sur l'arbre 61E et articulée à une manivelle 61I articulée au volet. Lors d'une manoeuvre de sectionnement, le profilé support 4, engagé dans le trou du disque 61C, est entraîné en rotation dans le sens de la flèche (Figure 10A); la rotation du disque 61C entraîne la rotation de l'arbre 61E et l'ensemble bielle-manivelle 61H-61I provoque la translation du volet 61 B qui vient obstruer l'accès à la partie droite du compartiment barre. Après la manoeuvre de sectionnement, si on retire le tiroir 56, un loquet de verrouillage 61J vient s'engager dans une échancrure 61K du disque 61C, immobilisant le volet 61B dans sa position. Ce loquet, muni d'un ressort, se dégage lorsque le tiroir est remis en place.

Les figures 10C et 10D illustrent une variante de réalisation des volets de protection.

On a représenté dans la figure 10C deux volets parallèles superposés désignés respectivement et globalement par les références 61L et 61R; le volet 61L comprend une première partie comportant trois portions rectangulaires 61L1, 61L2 et 61L3 munies chacune d'une échancrure et réunies par une portion allongée 61M munie de fentes oblongues 61N; le volet 61L comprend une seconde partie comprenant trois portions 61L1', 61L2' et 61 L3' munies chacune d'une échancrure et réunies par une portion allongée 61M' munie d'ergots 61P de part et d'autre de ladite portion et s'engageant dans les fentes 61N; les parties du volet 61L sont rappelées l'une vers l'autre par des ressorts tels que 610; les échancrures définissent des ouvertures épousant la périphérie des pôles lorsque ceux-ci sont en position enclenchée, ce qui sépare la partie câbles de la cellule de la partie jeu de barres.

Le volet 61R comprend une première partie comprenant trois portions rectangulaires 61R1, 61R2 et 61R3 réunies par une portion allongée non référencée munie de fentes oblongues et une seconde partie 61R1', 61R2' et 61R3' réunie par une portion allongée non référencée munie de fentes oblongues s'engageant dans les ergots 61P; la première partie et la seconde partie sont rappelées l'une vers l'autre par un ressort 61S.

Lorsque le disjoncteur auto-sectionneur est en position déclenchée et sectionnée, le volet 61R assure la séparation du compartiment câbles et du compartiment barres de la cellule.

Les volets 61L et 61R sont manoeuvrés soit par les pôles eux-mêmes qui portent un éperon tel que celui référencé 61T, soit par un mécanisme du type de celui représenté en référence aux figures 10A et 10B.

Le coffret 5 contient, outre le relais à maximum de courant précité, tout le mécanisme de mise en rotation de l'arbre de commande 38, permettant d'effectuer des cycles d'ouverture et de fermeture de la partie disjoncteur du disjoncteur auto-sectionneur de l'invention. La figure 11 est un schéma de principe de ce mécanisme dont l'intérêt est qu'il est directement relié à l'arbre de commande 38 du disjoncteur auto-sectionneur. Il suffit de donner le principe de ce mécanisme; sa mise en oeuvre est à la portée de l'homme du métier qui pourra utilement se référer aux Techniques de l'Ingénieur, Appareillage électrique d'interruption à haute tension, par Eugène MAURY, D 657-4, page 49.

Dans la figure 11, on reconnaît l'arbre 38 disposé à l'intérieur de la poutre 4 solidarisée au boîtier de commande 5.

Le mécanisme comprend un tambour 80 muni d'un ressort et qui constitue le réservoir d'énergie de manoeuvre. Un moto-réducteur 81 permet d'entraîner le tambour pour réarmer le ressort. Le tambour entraîne en rotation un arbre 82 tournant toujours dans le même sens sous l'action de la détente du ressort; cet arbre est associé à des dispositifs d'accrochage 83 à commande électrique ou manuelle, permettant de réaliser les cycles habituels d'ouverture et de fermeture (par exemple un cycle OUVERTURE, 0,1s FERMETURE, OUVERTURE). Un dispositif excentrique 84 permet de transformer le mouvement à sens unique de l'arbre 82 en un mouvement circulaire alternatif communiqué à l'arbre commande 38 des pôles du disjoncteur auto-sectionneur.

Le mécanisme comporte, comme il est bien connu, un organe de réarmement manuel comportant une manivelle 85 visible dans les figures 1, 8 et 9.

Nous avons vu, dans l'exemple de mise en oeuvre du disjoncteur auto-sectionneur décrit en référence aux figures 6 à 9, une cellule classique comportant tous les éléments nécessaires à une alimentation en moyenne tension à partir d'un jeu de barres. Typiquement, la tension nominale est de 36 kV et le courant nominal de 1250 A.

D'autres exemples d'application du disjoncteur auto-sectionneur de l'invention sont décrits maintenant.

La figure 12 est une vue de côté en élévation d'une cellule à deux jeux de barres et un départ, utilisant deux disjoncteurs auto-sectionneurs de l'invention. La cloison latérale de la cellule a été ôtée pour permettre de voir l'intérieur de la cellule.

La cellule comprend deux caissons 86 et 87 montés dos-à-dos et comportant chacun deux disjoncteurs auto-sectionneurs dont les pôles sont référencés respectivement 88A, 88B, 88C, et 89A, 89B, 89C. Les barres 90A, 90B, 90C pour le caisson 86 et 91A, 91B, 91C pour le caisson 87 sont portées respectivement par les toits 92 et 93 des cellules 86 et 87, au moyen d'isolateurs dont seul l'isolateur 94B a été représenté pour alléger le dessin.

Dans les caissons, les pôles sont portés par des profilés 96 et 97, identiques aux profilés 4 des figures précédentes, et reliées à des coffrets de commande 98 et 99.

Les caissons reposent sur des caissons câbles 100 et 101 dont l'un est vide puisqu'il n'y a qu'un seul départ.

Des bornes inférieures 102A, 102B, 102C et 103A, 103B et 103C sont portées par des isolateurs fixés aux parois des caissons. Seuls les isolateurs 106C et 107C ont été représentés dans le dessins.

Les bornes inférieures sont reliées deux à deux par des barres telles que 108A et 108B.

Des bornes 103A, 103B, 103C partent respectivement trois câbles 110A, 110B et 110C.

Une cloison pare-feu 111 peut éventuellement être disposée entre les deux ensembles 86, 100 et 87, 101.

La cellule de la figure 12 utilise deux disjoncteurs auto-sectionneurs de l'invention en lieu et place de deux sectionneurs et d'un disjoncteur utilisés dans l'art antérieur. L'utilisation de disjoncteurs auto-sectionneurs de l'invention, qui regroupent chacun les fonctions coupure, commutation et isolement, permet d'éliminer tous les verrouillages compliqués habituels et permet de réaliser des postes à deux jeux de barres entièrement télécommandés.

On voit que le caisson standard décrit permet donc de réaliser aisément une cellule à deux jeux de barres et un départ. Bien entendu cet exemple n'est pas limitatif, et on peut réaliser tous les schémas envisageables.

L'exemple de la figure 12 concerne typiquement une cellule pour une tension de 36 kV et un courant nominal de 1250 A. Pour un courant nominal de 2500 A, on peut placer, pour chaque pôle, deux disjoncteurs auto-sectionneurs en parallèle, comme il est montré dans la figure 13.

Dans cette figure, on distingue deux pôles 112 et 113 montés sur un même profilé 114. Le même isolateur de barre 115 porte une barre avec deux branches en U 116 et 117.

On notera que la présence côte-à-côte des deux transformateurs de courant des pôles assure un équilibrage des courants.

Un autre exemple d'application est représenté dans la figure 14 et concerne un ensemble pour la protection et le démarrage d'un moteur.

Cet ensemble comprend une cellule disjoncteur 121 du type représenté dans la figure 7, et comprenant un disjoncteur auto-sectionneur à trois pôles dont seul le pôle 122A est visible dans la figure. Le jeu de barres est référencé 123.

Une seconde cellule 124, placée à côté de la cellule 121 et utilisant le même jeu de barres 123, contient un disjoncteur auto-sectionneur selon l'invention équipé d'ampoules à vide du type "contacteur", c'est-à-dire à courant nominal faible mais pouvant effectuer un grand nombre de manoeuvres. On voit dans la figure un pôle 125A de cet appareil devenu un contacteur auto-sectionneur, qui permet d'actionner un moteur alimenté par un câble 126 et protégé par un fusible 127. Bien entendu, dans cette cellule 124, la commande à ressort de l'appareil est remplacée par un moteur électromagnétique de contacteur industriel à basse tension monté directement sur la tringle de manoeuvre du contacteur auto-sectionneur, avec ou sans accrochage. La largeur de l'ensemble de la figure 14 est notablement plus faible que celle des ensembles équivalents de l'art antérieur. A titre d'exemple, pour une cellule à 7 kV, la cellule aurait une largeur totale d'environ 350 mm.

D'une manière générale, les cellules réalisées au moyen du disjoncteur auto-sectionneur de l'invention occupent une surface au sol plus réduite que celle utilisée par les cellules de l'art antérieur remplissant les mêmes fonctions.

Ainsi, dans l'art antérieur, la profondeur d'une cellule comprend la somme de:
- l'espace nécessaire entre le mur et la cellule proprement dite pour permettre l'accès aux barres ou au câbles,
- la profondeur de la partie contenant le jeu de barres, le départ câbles et les sectionneurs,
- la place pour le disjoncteur débrochable.

Le disjoncteur auto-sectionneur de l'invention permet de réaliser des cellule adossées au mur et qui ne comportent au sol qu'une profondeur réduite.

Dans l'art antérieur, la largeur d'une cellule triphasée est au moins égale à 3P + 4d, où P est la largeur d'un pôle et d est la distance d'isolement dans l'air entre deux pôles. Cette distance ne peut être réduite qu'en utilisant des isolants entre les pôles, mais ceci grève le coût de la cellule et présente l'inconvénient que les isolants sont sujets à vieillissement et doivent être surveillés et changés.

La largeur d'une cellule comprenant des disjoncteurs auto-sectionneurs selon l'invention est égale à P' + 2d , où P' est la largeur d'un pôle déjà inférieure à P.

L'invention permet de simplifier de manière importante les cellules de protection moyenne tension.

Un exemple concerne la réalisation d'une cellule de protection par disjoncteur d'un départ. La figure 15 représente schématiquement une cellule 145 de protection de câbles selon l'art connu, tandis que la figure 16 représente une cellule 152 modifiée par l'utilisation du disjoncteur auto-sectionneur selon l'invention.

Dans la figure 15, la cellule 145 comporte un jeu de barres 146, un sectionneur 147, un disjoncteur 148, un transformateur de courant 149 et un support isolant 150 auquel est relié le câble 151.

Dans la figure 16, dans laquelle les éléments communs à la figure 15 ont reçu les mêmes numéros de référence, le sectionneur, le disjoncteur et le transformateur de courant ont été remplacé par un disjoncteur auto-sectionneur 153 qui possède son propre capteur de courant 153A.

On observe que la largeur de la cellule 152 est inférieure à celle de la cellule 145 de l'art antérieur. Quant à la profondeur, on a montré plus haut que celle de la cellule comportant le disjoncteur-sectionneur de l'invention est bien inférieure à celle de la cellule de l'art antérieur.

Un autre exemple est celui d'une cellule de protection générale d'un poste d'abonné moyenne tension/basse tension.

Le schéma d'une telle cellule est donné dans la figure 17.

La cellule comprend un jeu de barres B1, un premier sectionneur S1, un disjoncteur D1, un premier transformateur de courant TC1 pour la protection, un second transformateur de courant TC2 pour le comptage, un second sectionneur S2 et un second jeu de barres B2.

Cette cellule est encombrante et nécessite une source auxiliaire pour assurer le déclenchement du disjoncteur.

Les figures 18 et 19 montrent une cellule comportant les mêmes fonctions réalisées au moyen d'un disjoncteur auto-sectionneur selon l'invention 161 comprenant son transformateur de courant 161A qui joue le rôle du transformateur TC1 pour le déclenchement du disjoncteur sur défaut. Le disjoncteur auto-sectionneur 161 est porté par son profilé support 161B solidaire du boîtier de commande 161C.

Le profilé porte également, pour chaque pôle, un transformateur de courant 162 destiné au comptage; ce transformateur a la particularité d'avoir extérieurement sensiblement la même forme qu'un pôle du disjoncteur auto-sectionneur. Il est monté tête-bêche avec le pôle, pour occuper la place minimale, et il est relié en série avec le pôle.

On a représenté en traits interrompus la silhouette des deux autre pôles de la cellule avec leur transformateur de comptage associé.

L'ensemble disjoncteur auto-sectionneur et transformateur de comptage peut être placé dans un tiroir comme on en a vu un exemple précédemment. Il est par suite extractible.

On voit que la cellule des figures 18 et 19 comporte bien toutes les fonctions de la cellule classique, mais qu'elle présente l'avantage qu'elle occupe un moindre encombrement au sol et qu'elle peut être réalisée à moindre coût.

La figure 20 représente une variante de réalisation d'une cellule réalisée avec un disjoncteur auto-sectionneur selon l'invention; cette cellule est conçue pour protéger les jeux de barres contre les risques de propagation des arcs.

A cet effet, la cellule comprend une cassette 200 dans laquelle peut glisser un tiroir 201 contenant les pôles 202 du disjoncteur auto-sectionneur et un compartiment câbles 203 contenant notamment les supports isolants 204 pour les câbles 205 et le sectionneur de terre 206.

Le jeu de barres 208 est placé dans un compartiment 209 séparé de la cassette par une paroi anti-arc 210. Le courant est acheminé au moyen de traversées 211 et 212 fixées à la paroi 210.

La cellule ainsi réalisée satisfait aux essais les plus exigeants (essais PELLA) et, en raison de sa conception et de l'utilisation des disjoncteurs auto-sectionneurs selon l'invention, cette cellule est peu sensible aux défauts entre phases.

On a indiqué que le disjoncteur auto-sectionneur de l'invention était utilisable pour une tension de 36kV.

En montant deux ampoules à vide en série dans la même traversée polaire, il est possible de doubler la tension d'utilisation de l'ensemble ou de doubler le pouvoir de coupure du disjoncteur.

La figure 21 illustre la mise en oeuvre de cette idée et représente la partie supérieure de la traversée d'un pôle de disjoncteur auto-sectionneur comprenant deux ampoules à vide. Les références utilisées sont les mêmes que dans la figure 2.

L'enveloppe 10A contient deux ampoules à vide 14 et 14A. Les éléments de l'ampoule 14A homologues de ceux de l'ampoule 14 ont reçu les mêmes numéros de référence assortis de la lettre A.

La tige mobile 22 de l'ampoule 14 est reliée par des étriers 211 et 212 à la tige mobile 22A de l'ampoule 14A. Ces étriers passent avantageusement dans les rainures 12 de l'enveloppe 10A.

La mise en série électrique des ampoules 14 et 14A est assurée par des cavaliers métalliques 213 soudés d'une part au flasque 17 de l'ampoule 14 et d'autre part au flasque 16A de l'ampoule 14A.

La disposition précédente permet de réaliser des disjoncteur auto-sectioneurs jusqu'à 72 kV et on pourra utiliser de tels appareils en particulier pour le remplacement des disjoncteurs à gros volumes d'huile.

On notera que dans certains cas, l'espace des rainures 12 pourra être rempli de liquide isolant ou d'hexafluorure de soufre SF6 pour améliorer la répartition de tension, le long de l'ensemble. Des mesures d'étanchéité devront alors être prises mais ces mesures sont bien connues de l'homme du métier.

La cellule représentée dans la figure 7 peut être aménagée pour permettre les fonctions habituelles du disjoncteur shunt.

Comme le montre la figure 22, un poste comprenant un disjoncteur d'arrivée DA et plusieurs départs triphasés (phases 1, 2 et 3) protégés par des disjoncteurs D1, D2, etc.., peut être équipé d'un disjoncteur shunt DS, qui est un disjoncteur tripolaire dont les pôles DS1, DS2 et DS3 peuvent être commandés séparément, et qui est branché entre les phases et la terre.

Ce type de disjoncteur est utilisé pour les réseaux avec neutre à la terre résistant ou impédant; il est ouvert en régime normal.

En cas de défaut entre une phase et la terre, le pôle correspondant à la phase en défaut est fermé, entraînant une brutale réduction de la tension aux bornes du défaut et par suite l'extinction de l'arc de défaut. La plupart du temps, le défaut disparaît donc par cette manoeuvre et le pôle du disjoncteur shunt est immédiatement réouvert.

En cas d'insuccès pour affranchir le défaut, le disjoncteur du départ en défaut s'ouvre.

On a pu constater statistiquement que la plupart des défauts entre phase et terre disparaissent par la manoeuvre du disjoncteur shunt et qu'ainsi la disponibilité du service est grandement accrue.

La figure 23 montre comment il faut modifier le schéma de la figure 22 pour réaliser la fonction du disjoncteur shunt à l'aide de disjoncteurs auto-sectionneurs selon l'invention. Les disjoncteurs D1, D2 de la figure 22 sont remplacés par des disjoncteurs auto-sectionneurs DAS1, DAS2. Le disjoncteur shunt est remplacé par un disjoncteur auto-sectionneur DAS3 dont le sectionneur de terre associé triphasé 70 (voir figure 7) est équipé de commandes unipolaires, de sorte qu'il est transformé en trois sectionneurs unipolaires 701, 702, 703 commandés séparément. En cas de défaut sur une phase d'un départ, le sectionneur correspondant à cette phase est fermé, puis ouvert. Si le défaut n'a pas disparu, le disjoncteur auto-sectionneur protégeant le départ en défaut s'ouvre.

Le disjoncteur auto-sectionneur de l'invention est particulièrement adapté à la réalisation de cellules permettant la mise à la terre du câble. Cette mise à la terre est exigée par les normes de certains pays en particulier au Royaume-Uni, et est connue sous le vocable anglais "Integral earthing". La figure 24 représente une cellule permettant cette mise à la terre. Elle comporte un tiroir extractible 750 enfermant les trois pôles d'un disjoncteur auto-sectionneur selon l'invention; seul le pôle 751 est visible dans la figure puisqu'il s'agit d'une représentation en bout.La référence 751A désigne la mâchoire supérieure du pôle 751, la référence 751B désignant la mâchoire inférieure. La cellule comprend un jeu de barres 752 et un départ de câbles 753. On note que par rapport à la cellule représentée dans les figures 6 et 7 le sectionneur de terre 70 a été supprimé.

La mise à la terre intégrale s'effectue de la manière suivante:
- le disjoncteur auto-sectionneur est mis en position déclenchée,
- le tiroir est extrait,
- le disjoncteur auto-sectionneur est basculé à 45 degrés par une rotation dans le sens horaire du profilé support,
- les trois pôles du disjoncteur sont court-circuités au moyen d'un étrier métallique 755 (figure 25), comprenant trois contacts 761, 762 et 763 venant s'engager dans les mâchoires supérieures 751A des pôles; l'étrier sert également à mettre à la terre les pôles du disjoncteur puisque les branches de l'étrier viennent en contact avec le tiroir qui est à la terre par le profilé métallique support des pôles. L'étrier comporte également des butées 764 et 765 qui serviront à limiter la course en rotation des pôles dans le sens antihoraire lorsqu'on rebasculera les pôles, et à maintenir ces derniers à une distance suffisante des barres 752,
- le tiroir étant toujours extrait et les pôles inclinés à 45 degrés, on fixe sur chacune des mâchoires inférieures 751B des pôles un prolongateur métallique 754,
- on remet le disjoncteur auto-sectionneur en position horizontale et on referme le tiroir,
- on fait pivoter les pôles dans le sens antihoraire jusqu'en butée, ce qui a pour effet de mettre les prolongateurs 754 en contact avec les départs de câbles,
- on ferme le disjoncteur auto-sectionneur, ce qui entraîne la mise à la terre des câbles à travers le disjoncteur.

Si à ce moment une tension est présente sur le câble, les pôles du disjoncteur s'ouvrent en raison du court-circuit établi.

On constate donc qu'une cellule équipée du disjoncteur auto-sectionneur de l'invention permet la réalisation de la mise à la terre intégrale grâce à quelques accessoires simples et parfaitement sûrs.

Bien entendu, en inversant la position des accessoires additionnels, on peut réaliser, si nécessaire, une mise à la terre des barres d'un poste à travers le disjoncteur. ("integral earthing").

L'invention s'applique à la réalisation de cellules d'encombrement au sol réduit, comme le montrent les figures 26 à 28.

Dans la figure 26, on observe que la même cellule 800, vue de face en coupe, comprend deux cassettes identiques comportant chacune un tiroir 801, 802 contenant chacun un disjoncteur auto-sectionneur 811, 812.

Les disjoncteurs auto-sectionneur supérieurs tel que 811 ont reçu des prises de courant adaptées 811' à la partie inférieure de leurs pôles pour venir coopérer avec un jeu de barres 813 placé entre les deux tiroirs. Les câbles tels que 814 des disjoncteurs auto-sectionneurs inférieurs tels que 812 s'évacuent vers le bas de la cellule, comme il a été décrit précédemment, notamment en référence aux figures 6 et 20 Les câbles 816 des disjoncteurs auto-sectionneurs supérieurs tel que 811 s'évacuent par une goulotte 815' à l'arrière du compartiment 815. Le compartiment 815 contient deux caissons 817 et 817A séparés par un manchon métallique 818 dans lequel passent les barres 813. Les caissons contiennent les relayages de protection et tous les auxiliaires nécessaires à la mise en oeuvre des disjoncteurs auto-sectionneurs.

A l'avant du compartiment 815, une goulotte 815" permet de loger les câble multiconducteurs de télécommande et de télésignalisation.

Du côté face avant des cellules, le manchon passe-barres 818 est utilisé comme zone connectique des cellules. On trouve dans cette zone:
- les connecteurs d'arrivée des câbles multiconducteurs de télécommande ou de liaisons intercellules,
- les connecteurs basse tension des deux caissons de protection,
- les connecteurs des circuits de commande et de signalisation des quatre tiroirs contenant les disjoncteurs auto-sectionneurs.

Il est important de noter que les caissons basse tension peuvent être fabriqués séparément (sous-traitance dans une autre usine) et montés sur le site.

Selon l'invention , si on adopte pour la cellule moyenne tension à 24kV une largeur 1 = 600 mm et une profondeur P = 1300 mm, si on prend une largeur x = 200 mm pour le compartiment adjacent 815, alors la surface au sol de la cellule double est voisine du mètre carré, ce qui représente un gain de plus de 100% par rapport aux plus petites cellules de l'art antérieur, remplissant, avec moins de sécurité en exploitation, les mêmes fonctions.

La cellule qui vient d'être décrite présente d'autres avantages:
- il n'y a plus qu'une seule charpente pour deux disjoncteurs auto-sectionneurs, ce qui constitue un gain sensible dans la réalisation,
- les caissons de protection peuvent être fabriqués indépendamment de la cellule (possibilité de sous-traitance) et montés sur le site,
- une grande simplification des circuits de filerie de la cellule est obtenue,
- les disjoncteurs auto-sectionneurs peuvent être parfaitement ventilés,
- il y a une réduction des risques de destruction des caissons de protection en cas d'arc interne dans une cellule,
- la protection peut être renforcée par interposition entre volumes moyenne et basse tension par des plaques en matériau anti-arc et ignifuges.

Par ailleurs, chacun des deux disjoncteurs auto-sectionneurs d'une même cellule conserve ses avantages spécifiques:
- pôles protégés,
- faible poids d'isolant,
- isolement entre phases assuré par l'air,
- longueur des conducteurs réduite, nombre de contacts minimal,
- montage des pôles sur un profilé à la masse,
- autoprotection de la partie hors ampoule des pôles par une protection sans source auxiliaire.

Industriellement, il n'est plus indispensable de monter les postes en usine; les postes peuvent être assemblés sur le site à partir des éléments moyenne tension et basse tension fabriqués et contrôlés sur chaîne en usine.

On peut réaliser des cellules du type des figures 26 à 28 pour toutes les tensions jusqu'à 36kV.

L'invention s'applique à la réalisation de postes à moyenne tension d'un concept nouveau, économiques et fiables.

Si on considère un poste électriques à moyenne tension de l'art antérieur, on observe que ces ouvrages, installés en zone rurale ou urbaine, sont pratiquement toujours installés dans un bâtiment particulier. Ils sont constitués de cellules préfabriquées à moyenne tension dont chacune constitue une entité séparée en ce qui concerne les arrivées ou départs par câbles, les appareillages de manoeuvre et de protection, et les équipements de relayage.

Un alignement de cellules constitue un poste grâce à leur raccordement à un jeu de barres commun à toutes les cellules.

On peut dire qu'il y a redondance entre les cellules et le poste puisqu'on enferme des volumes cellules dans un volume poste.

Les exploitants de réseaux à moyenne tension ont toujours cherché à minimiser les conséquences dans un poste d'un éventuel incident dans une cellule. De nouveaux efforts dans ce sens sont en cours dans le cadre des campagnes européennes pour l'amélioration de la qualité de la distribution de l'énergie aux abonnés:
- efforts pour canaliser les défauts à la terre et éviter les défauts symétriques entre phases toujours plus violents et causes de plus de dégâts.
- efforts pour éviter que l'arc se propage et détruise d'autres cellules que celle dans laquelle s'est produit l'incident.

Malgré cela, il est toujours difficile, en cas de défaut, de canaliser l'arc dans des cellules métalliques d'encombrement réduit et qui par ailleurs sont remplies de matériaux isolants combustibles.

Les exploitants de tous les pays déplorent chaque année la destruction par incendie de plusieurs postes à moyenne tension dus en général à des défauts prolongés en raison de la disparition au cours du défaut de la ou des sources auxiliaires d'alimentation des protections.

Le disjoncteur auto-sectionneur permet la réalisation de postes à moyenne tension de construction simple et économique comme le montrent les figures 29 et 30.

Dans les figures, on distingue une structure 900 de forme sensiblement parallélépipédique réalisée en béton, en GRC ou en matériau de construction équivalent résistant au feu, et comprenant plusieurs alvéoles 901, 902, 903, contenant des disjoncteurs auto-sectionneurs de l'invention; à chacun des alvéoles est adjoint un compartiment 901A, 901B, 901C contenant des équipement de protection montés de préférence sur des tiroirs coulissants ou placés dans des caissons amovibles non représentés. Les compartiments et les alvéoles sont surmontés d'un plafond 905 définissant avec un toit 906 un compartiment 907 où est placé un jeu de barres commun aux compartiments.

Chaque compartiment reçoit un tiroir 911, 912, 913 muni d'un disjoncteur auto-sectionneur du type décrit précédemment, 921, 922, 923 avec leur profilé support commun 916 et leur coffret de commande 915. Ces disjoncteurs peuvent être connectés au jeu de barres par des traversées isolantes 931, 932, 933 et à des départs 941, 942, 943 de câbles partant dans des caniveaux aménagés dans le socle 910 du poste.

A l'avant du poste (figure 30) est ménagé un couloir de circulation fermé en service normal par un volet 920. En cas d'intervention sur l'un des disjoncteur auto-sectionneurs, par exemple le disjoncteur auto-sectionneur 922, le volet est soulevé et le tiroir 912 extrait, comme il est représenté en traits interrompus dans la figure 30.

Toutes les mesures de ventilation sont prises pour éviter toute condensation ou oxydation. La structure aérée des disjoncteurs auto-sectionneurs selon l'invention facilite la réalisation de postes pour l'extérieur.

Le disjoncteur auto-sectionneur de l'invention se prête à la réalisation de cellules contacteur, en utilisant une ampoule à vide de calibre approprié.

Le poste qui vient d'être décrit en référence aux figures 29 et 30 présente, outre des avantages sur le plan de l'économie de réalisation, des avantages de sécurité en exploitation. On citera tous les avantages inhérents à l'emploi de disjoncteurs auto-sectionneurs de l'invention. Par ailleurs, la conception en compartiments et alvéoles de béton ou matériau analogue assure que les défauts entre phases ont peu de possibilités de se propager ou de détruire les équipements basse tension nécessaires à l'exploitation, à la télécommande ou à la télésignalisation.
Bien entendu, les exemples d'application de l'invention sont multiples et ne sauraient être limités aux quelques exemples donnés, l'invention s'appliquant à toutes les réalisations en moyenne tension qui utilisent des disjoncteurs, des sectionneurs et des dispositifs de mesure de courant.

## Revendications

1. Disjoncteur auto-sectionneur multipolaire comprenant pour chaque pôle (1, 2, 3) une traversée isolante (10) enfermant une ampoule à vide (14) comprenant un contact fixe (18) et un contact mobile (21), la traversée comportant à une première extrémité un premier contact (20) relié à une première borne de l'ampoule et destiné à coopérer avec un conducteur d'arrivée, et à une seconde extrémité un second contact (48) relié à une seconde borne de l'ampoule et destiné à coopérer avec un conducteur de départ, caractérisé en ce que les traversées sont fixées à un profilé métallique (4) le long et à l'abri duquel est placé un arbre de manoeuvre (38) commun aux ampoules et actionné par une commande de manoeuvre des contacts mobiles des ampoules contenue dans un coffret solidaire (5) du profilé (4), ce dernier étant monté mobile en rotation autour de sa propre direction pour assurer la fonction sectionnement.

2. Disjoncteur auto-sectionneur selon la revendication 1, caractérisé en ce que chaque pôle comprend une traversée isolante (10) comprenant une première partie (10A) contenant l'ampoule à vide (14), ladite ampoule à vide comportant une enveloppe isolante (15) fermée par un premier (16) et un second (17) flasques métalliques, le premier flasque métallique (16) portant extérieurement à l'enveloppe une première mâchoire de contact (20) et à l'intérieur de l'enveloppe ledit contact fixe (18), le deuxième flasque (17) étant traversé de manière étanche par une tige métallique mobile (22) portant ledit contact mobile (21), la traversée isolante comprenant une seconde partie cylindrique (10B) à l'intérieur de laquelle est disposé de manière coaxiale un tube métallique (25) mécaniquement relié à l'ampoule à vide et électriquement relié à ladite tige métallique mobile (22), ledit tube (25) contenant une tige de commande (30) reliée à ladite tige métallique mobile (22), les traversées isolantes de chaque pôle étant fixées audit profilé métallique (4) disposé sensiblement à la limite entre la première (10A) et la seconde (10B) partie de chaque traversée, la tige de commande (30) de chaque pôle étant reliée mécaniquement audit arbre de commande (38) par l'intermédiaire d'un levier (32) articulé sur une pièce d'extrémité (26) solidaire du tube métallique (25), d'un bras isolant (35, 32A) articulé par une première extrémité audit levier (32) et par une seconde extrémité à une bielle (37, 38B) reliée audit arbre, ladite pièce d'extrémité (26) étant mécaniquement et électriquement reliée audit tube métallique (25) et constituant une seconde mâchoire de contact (48).

3. Disjoncteur auto-sectionneur selon l'une des revendications 1 et 2, caractérisé en que l'arbre de manoeuvre (38) est un arbre rotatif.

4. Disjoncteur auto-sectionneur selon l'une des revendications 1 et 2, caractérisé en ce que l'arbre de manoeuvre (38) est un arbre déplacé en translation le long de son axe.

5. Disjoncteur auto-sectionneur selon l'une des revendications 2 à 4, caractérisé en ce que ladite première partie (10A) de ladite traversée isolante (10) comporte des rainures (12) intérieures et parallèles à l'axe de la traversée, définissant avec la paroi extérieure de l'ampoule à vide des canaux de ventilation, l'air circulant dans le tube métallique (25) et pénétrant dans lesdits canaux par des trous (25A) dans ledit tube.

6. Disjoncteur auto-sectionneur selon l'une des revendications 2 à 4, caractérisé en ce que l'ampoule à vide (14) est placée dans une cage cylindrique en résine (13) disposée dans ladite première partie (10A) de la traversée (10).

7. Disjoncteur auto-sectionneur selon la revendication 6, caractérisé en ce que ladite cage en résine (13) comporte des rainures intérieures (13A) parallèles à son axe , définissant avec la paroi de l'ampoule à vide (14) des canaux de ventilation, l'air circulant dans le tube métallique (25) et pénétrant dans lesdits canaux par des trous (25A) dans ledit tube.

8. Disjoncteur auto-sectionneur selon l'une des revendications 2 à 7, caractérisé en ce que la tenue diélectrique entre ledit tube métallique (25) et ladite seconde partie (10B) de la traversée isolante est assurée par une gaine (27) en matériau isolant compressible glissée sur ledit tube métallique (25) et engagée dans ladite seconde partie (10B), le montage étant facilité par l'emploi d'une graisse isolante.

9. Disjoncteur auto-sectionneur selon la revendication 8, caractérisé en ce que ladite gaine (27) est en latex.

10. Disjoncteur auto-sectionneur selon l'une des revendications 2 à 9, caractérisé en ce que la chaîne cinématique entre ladite tige de commande (30) et ledit arbre de commande (38) comprend un mécanisme de rattrapage de jeu à ressort (53).

11. Disjoncteur auto-sectionneur selon l'une des revendications 2 à 9, caractérisé en ce que l'extrémité de la tige de commande (30) comprend une portion tubulaire d'extrémité (30A) dans laquelle s'engage ladite tige mobile (22), ladite tige mobile (22) comprenant une lumière (22A) dans laquelle est engagée une première goupille (22B) traversant ladite tige de commande, un ressort (22C) s'appuyant contre une première rondelle d'appui (22D) en contact avec ladite extrémité de la tige de commande (30), et contre une seconde rondelle d'appui (22E) engagée dans la tige mobile (22) et maintenue par une seconde goupille (22F) traversant la tige mobile (22).

12. Disjoncteur auto-sectionneur selon l'une des revendications 2 à 11, caractérisé en ce que la liaison mécanique dudit tube métallique (25) avec l'ampoule à vide et la liaison électrique dudit tube métallique (25) avec ladite tige mobile de contact (22) est assurée au moyen d'un manchon (15A) fixé audit second flasque (17), d'une bague (15B) solidarisée audit manchon (15A) et audit tube (25) et d'un contact du type accordéon ou bague (15C) disposé à l'intérieur de ladite bague et entourant ladite tige (22).

13. Disjoncteur auto-sectionneur selon l'une des revendications 2 à 10, caractérisé en ce que la tige mobile (22) est vissée à la tige de commande (30), la liaison électrique entre la tige mobile (22) et le tube métallique étant assuré par un contact à lamelles (15D) fixé sur ladite tige mobile (22).

14. Disjoncteur auto-sectionneur selon l'une des revendications 2 à 10, caractérisé en ce que la tige de commande est constitué par la tige mobile (22) de l'ampoule à vide.

15. Disjoncteur auto-sectionneur selon l'une des revendications 2 à 14, caractérisé en ce que ladite pièce d'extrémité (26) comprend deux demi-colliers (41, 42) serrés sur ledit tube métallique et en butée sur l'extrémité de ladite seconde partie (10B) de la traversée isolante (10).

16. Disjoncteur auto-sectionneur selon la revendication 15, caractérisé en ce que les demi-colliers (41, 42) portent des ergots (45) coopérant avec des alvéoles pratiqués dans ladite seconde partie (10B) de la traversée isolante (10) pour immobiliser ledit tube métallique (25) en rotation.

17. Disjoncteur auto-sectionneur selon l'une des revendications 6 à 16, caractérisé en ce que ladite gaine (27) est bloquée en translation par un circlips (28) serré sur ledit tube métallique (25).

18. Disjoncteur auto-sectionneur selon l'une des revendications 2 à 17, caractérisé en ce qu'un bobinage à noyau magnétique torique fermé (50) est glissé autour de ladite seconde partie (10B) de la traversée isolante, au niveau du congé (10C) de raccordement de ladite première (10A) et de ladite seconde (10B) partie de la traversée isolante (10).

19. Disjoncteur auto-sectionneur selon la revendication 18, caractérisé en ce que la surface extérieure de la seconde partie (10B) de la traversée isolante (10) est revêtue d'une métallisation (52) au droit dudit bobinage (50) et du profilé support (4).

20. Disjoncteur auto-sectionneur selon l'une des revendications 1 à 19, caractérisé en ce que la traversée comprend, au voisinage du congé (10C), une grille métallique (51A), insérée au moulage, et mise au potentiel dudit tube métallique (25).

21. Disjoncteur auto-sectionneur selon l'une des revendications 1 à 20, caractérisé en ce que chaque traversée comprend une seconde ampoule à vide (14A) relié en série à la première ampoule à vide (14), les tiges mobiles des deux ampoules comportant des moyens 211, 212) de solidarisation.

22. Cellule à moyenne tension, caractérisée en ce qu'elle comprend au moins un disjoncteur auto-sectionneur selon l'une des revendications 1 à 21.

23. Cellule à moyenne tension selon la revendication 22, caractérisée en ce que le disjoncteur auto-sectionneur est placé dans un tiroir (56) coulissant dans un caisson (55A) comportant des isolateurs supports (58) pour un jeu de barres (59) et des isolateurs supports (67) pour un départ de câbles (65), ledit disjoncteur auto-sectionneur pouvant, en position déclenchée du sectionneur prendre place entièrement dans le tiroir qui peut être extrait du caisson.

24. Cellule à moyenne tension selon la revendication 23, caractérisée en ce que le caisson (55A) comporte un premier volet (61), fixe, séparant en partie l'espace contenant les barres (59) de l'espace du tiroir (56).

25. Cellule à moyenne tension selon les revendications 23 et 24, caractérisé en ce que le caisson (55A) comporte un second volet (61B), mobile, occupant lorsque le disjoncteur est en service une position au-dessus du premier volet (61) et venant, lorsque le disjoncteur est placé en position sectionnée, occuper une position où il empêche complètement, avec le premier volet (61), l'accès à l'espace des barres (59) depuis l'espace du tiroir (56).

26. Cellule selon la revendication 25, caractérisé en ce que le mouvement du second volet (61B) est assuré par un disque (61C) entraîné en rotation par la rotation du profilé (4) et actionnant au moins un jeu d'embiellages (61F,61G,61H, 61I) reliés audit second volet (61B) qui coulisse dans des glissières (61A) fixées au caisson (55A).

27. Cellule selon la revendication 26, caractérisé en ce que le disque (61C) comprend une échancrure (61K) coopérant avec un loquet (61J) pour immobiliser le disque lorsque le tiroir est extrait, le loquet étant déverrouillé par action du tiroir (56) lorsque ce dernier est remis en place.

28. Cellule selon la revendication 23, caractérisé en ce qu'elle comprend un premier volet (61L) comprenant une première partie comportant trois portions rectangulaires (61L1, 61L2, 61L3) munies chacune d'une échancrure et réunies par une portion allongée (61M) munie de fentes oblongues (61N), et une seconde partie comprenant trois portions rectangulaires (61L1', 61L2', 61L3') munies chacune d'une échancrure et réunies par une portion allongée (61M') munie d'ergots (61P) s'engageant dans les fentes (61N), les parties étant rappelées l'une vers l'autre par un ressort, la cellule comprenant un second volet (61R) parallèle au premier volet (61L) et comprenant une première partie comprenant trois portions rectangulaires (61R1, 61R2, 61R3) réunies par une portion munie de fentes oblongues et une seconde partie comprenant trois portions rectangulaires (61R1', 61R2', 61R3') réunies par une portion allongée munie de fentes dans lesquelles s'engagent lesdits ergots (61P), les parties étant rappelées l'une vers l'autre par des ressorts (61S), les deux volets étant disposés parallèlement entre eux et manoeuvrés par le mouvement des pôles ou par un mécanisme lié au mouvement des pôles.

29. Cellule selon l'une des revendications 23 à 28, caractérisée en ce que le tiroir (56) comporte un obturateur (62) entraîné en rotation par la rotation du disjoncteur auto-sectionneur lors du passage de la position enclenchée du sectionneur à la position déclenchée et vice-versa et mettant les pôles à la terre lorsque le disjoncteur auto-sectionneur est en position sectionnée.

30. Cellule à moyenne tension selon l'une des revendications 23 à 29, caractérisé en ce que la rotation du profilé métallique (4) est assurée par un moto-réducteur (78) fixé au tiroir (56) et coopérant avec un pignon (77) solidaire du profilé (4).

31. Cellule à moyenne tension caractérisée en ce qu'elle comprend deux jeux de barres (90A, 90B, 90C; 91A, 91B, 91C), un départ de câbles (110A, 110B, 110C), et deux tiroirs équipés chacun d'un disjoncteur auto-sectionneur selon l'une des revendications 1 à 21, les extrémités côté câbles des disjoncteurs auto-sectionneurs étant reliées pôle par pôle, les deux disjoncteurs auto-sectionneurs possédant chacun un profilé métallique support (96, 97) associé chacune à un coffret de commande (98, 99).

32. Cellule à moyenne tension selon l'une des revendications 22 à 31, caractérisée en ce que chaque pôle d'un disjoncteur auto-sectionneur comprend deux traversées selon l'une des revendications 1 à 10, connectées électriquement en parallèle.

33. Cellule à moyenne tension caractérisé en ce qu'elle comprend un disjoncteur auto-sectionneur selon l'une des revendications 1 à 21, chaque pôle (161) étant en série avec un transformateur de courant (162) ayant extérieurement sensiblement la même forme et le même volume qu'un pôle et disposé tête-bêche par rapport au pôle et fixé sur le profilé métallique commun support (161B) des pôles du disjoncteur auto-sectionneur.

34. Cellule a moyenne tension selon l'une des revendications 23 à 33, caractérisée en ce qu'elle comprend un sectionneur de terre (70) servant à mettre à la terre les câbles départ protégés par le disjoncteur auto-sectionneur.

35. Cellule selon la revendication 34, caractérisé en ce que le sectionneur de terre (701, 702, 703) comporte des commandes électromagnétiques unipolaires.

36. Cellule à moyenne tension caractérisée en ce qu'elle comprend un disjoncteur auto-sectionneur (751) selon l'une des revendications 1 à 21, un jeu de barres (752) et un départ de câbles (753), lesdits câbles pouvant être mis à la terre de manière intégrale à travers le disjoncteur au moyen d'un étrier (755) court-circuitant les mâchoires supérieures (751A) du disjoncteur et les mettant à la terre par contact avec le tiroir (750) du disjoncteur, et au moyen de trois conducteurs prolongateurs (754) assurant le contact entre les mâchoires inférieures (751B) du disjoncteur et les départs câbles.

37. Cellule selon la revendication 36, caractérisée en ce que les barres sont mises à la terre en inversant le rôle respectif de l'étrier (755) et des conducteurs prolongateurs (754).

38. Cellule selon l'une des revendications 36 et 37, caractérisé en ce que l'étrier comporte des butées électriques et mécaniques (764) de limitation de la course en rotation du tiroir (750).

39. Cellule à moyenne tension, caractérisée en ce qu'elle comprend deux tiroirs (801, 802) disposés l'un au-dessus de l'autre et associé chacun à un disjoncteur auto-sectionneur (811, 812) selon l'une des revendications 1 à 21, les disjoncteurs sectionneurs coopérant avec un jeu de barres commun (813) disposés entre les deux tiroirs.

40. Cellule selon la revendication 39, caractérisé en ce que les câbles (816) du disjoncteur auto-sectionneur supérieur (811) passent dans une première goulotte (815') disposée à l'arrière d'un compartiment (815) adjacent à la cellule.

41. Cellule selon la revendication 40, caractérisée en ce que le compartiment (815) comprend deux caissons basse tension amovibles contenant les relayages de protection et tous les auxiliaires nécessaires à la mise en oeuvre des disjoncteurs auto-sectionneurs.

42. Cellule selon l'une des revendications 40 et 41, caractérisée en ce qu'à l'avant dudit compartiment (815) est placée une seconde goulotte contenant les câbles multiconducteurs de télécommande ou de télésignalisation.

43. Cellule selon l'une des revendications 40 à 42, caractérisée en ce que le jeu de barres (813) pénètre dans ledit compartiment par un manchon passe-barres (818).

44. Cellule selon la revendication 43, caractérisée en ce qu'à l'avant dudit manchon passe-barres (818) l'espace dans le compartiment est utilisé comme espace de connectique, notamment pour les câbles multiconducteurs de télécommande ou de liaison intercellules.

45. Cellule contacteur caractérisé en ce qu'elle comprend un disjoncteur auto-sectionneur selon l'une des revendications 1 à 21.

46. Poste à moyenne tension caractérisé en ce qu'il comprend une structure sensiblement parallélépipédique en un matériau de construction résistant au feu, ladite structure comprenant une pluralité de compartiments (901, 902, 903) contenant chacun un disjoncteur auto-sectionneur selon l'une des revendications 1 à 21, chaque compartiment étant associé à un alvéole (901A, 902A, 903A) contenant des appareillages basse tension pour le fonctionnement des disjoncteurs auto-sectionneurs ainsi que pour la télécommande et la télésignalisation, les compartiments et alvéoles étant surmontés d'un plafond (905) définissant avec un toit (906) un compartiment (907) où est placé un jeu de barres (908) commun aux disjoncteurs auto-sectionneurs avec lesquels les barres coopèrent grâce à des traversées isolantes (931, 932, 933), le poste comportant en face avant un couloir (917), les câbles de sortie (951, 952, 953) passant dans des caniveaux du socle (910) du poste.

## Patentansprüche

1. Selbsttrennender Leistungsschalter, der für jeden Pol (1, 2, 3) eine isolierende Traverse (10) enthält, die eine Vakuumkammer mit einem ortsfesten Kontakt (18) und einem beweglichen Kontakt (21) umschließt und an einem ersten Ende einen ersten an eine erste Klemme der Kammer angeschlossenen Kontakt (20), der mit einem ankommmenden Leiter zusammenwirkt, sowie an einem zweiten Ende einen zweiten an eine zweite Klemme der Kammer angeschlossenen Kontakt (48) aufweist, der mit einem Abgangsleiter zusammenwirken soll, dadurch gekennzeichnet, daß die Traversen an einem Metallprofil (4) befestigt sind, entlang von dem eine gemeinsame Betätigungswelle (38) für die Kammern verläuft, welche vom Metallprofil einen Abstand hat und von einer Betätigungssteuerung der beweglichen Kontakte der Kammern betätigt wird, wobei diese Betätigungssteuerung in einem mit dem Metallprofil (4) fest verbundenen Kasten (5) betätigt wird und das Metallprofil um seine eigene Achse drehbeweglich ist, um die Abtrennung zu bewirken.

2. Selbsttrennender Leistungsschalter nach Anspruch 1, dadurch gekennzeichnet, daß jeder Pol eine isolierende Traverse (10) mit einem ersten Teil (10A) enthält, der die Vakuumkammer (14) aufweist, welche eine durch einen ersten Metallflansch (16) und einen zweiten Metallflansch (17) verschlossene Isolierumhüllung (15) aufweist, wobei der erste Metallflansch (16) außerhalb der Umhüllung eine erste Kontaktklemme (20) und innerhalb der Umhüllung den ortsfesten Kontakt (18) trägt, während der zweite Flansch (17) dicht von einem beweglichen Metallstift (22) durchdrungen wird, der den beweglichen Kontakt (21) trägt, daß die isolierende Traverse einen zweiten zylindrischen Teil (10B) aufweist, in dem koaxial ein mechanisch an die Vakuumkammer und elektrisch an den beweglichen Metallstift (22) angeschlossenes Metallrohr (25) angeordnet ist, das einen an den beweglichen Metallstift angeschlossenen Steuerstift (30) enthält, daß die isolierenden Traversen jedes Pols an dem im wesentlichen am Übergang zwischen dem ersten (10A) und dem zweiten Teil (10B) jeder Traverse liegenden Metallprofil (4) befestigt sind, daß der Steuerstift (30) jedes Pols mechanisch mit der Steuerwelle (38) über einen Hebel (32), der an einem mit dem Metallrohr (25) fest verbundenen Endstück (26) angelenkt ist, und über einen isolierenden Arm (35, 32A) verbunden ist, der mit einem ersten Ende an dem Hebel (32) und mit einem zweiten Ende an einer Pleuelstange (37, 38B) angelenkt ist, die mit der Welle verbunden ist, und daß das Endstück (26) mechanisch und elektrisch mit dem Metallrohr (25) verbunden ist und eine zweite Kontaktklemme (48) bildet.

3. Selbsttrennender Leistungsschalter nach einem der Ansprüche 1 und 2, dadurch gekennzeichnet, daß die Betätigungswelle (38) eine drehbare Welle ist.

4. Selbsttrennender Leistungsschalter nach einem der Ansprüche 1 und 2, dadurch gekennzeichnet, daß die Betätigungswelle (38) eine entlang ihrer Achse translatorisch bewegliche Welle ist.

5. Selbsttrennender Leistungsschalter nach einem der Ansprüche 2 bis 4, dadurch gekennzeichnet, daß der erste Teil (10A) der isolierenden Traverse (10) auf der Innenseite zur Achse der Traverse parallele Rinnen (12) aufweist, die mit der Außenwand der Vakuumkammer Belüftungskanäle definieren, und daß die Luft durch das Metallrohr (25) strömt und in die Kanäle durch Löcher (25A) in dem Rohr eindringt.

6. Selbsttrennender Leistungsschalter nach einem der Ansprüche 2 bis 4, dadurch gekennzeichnet, daß die Vakuumkammer (14) in einem zylindrischen Käfig (13) aus Harz untergebracht ist, der sich in dem ersten Teil (10A) der Traverse (10) befindet.

7. Selbsttrennender Leistungsschalter nach Anspruch 6, dadurch gekennzeichnet, daß der Käfig (13) aus Harz innen Rinnen (13A) parallel zu seiner Achse aufweist, die mit der Wand der Vakuumkammer (14) Belüftungskanäle definieren, wobei die Luft in das Metallrohr (25) strömt und in die Kanäle durch Löcher (25A) in dem Rohr eindringt.

8. Selbsttrennender Leistungsschalter nach einem der Ansprüche 2 bis 7, dadurch gekennzeichnet, daß die dielektrische Festigkeit zwischen dem Metallrohr (25) und dem zweiten Teil (10B) der isolierenden Traverse durch eine Hülle aus komprimierbarem Isoliermaterial gewährleistet wird, die auf das Metallrohr (25) geschoben und in den zweiten Teil (10B) gesteckt ist, wobei die Montage durch die Verwendung eines isolierenden Gleitfetts erleichtert wird.

9. Selbsttrennender Leistungsschalter nach Anspruch 8, dadurch gekennzeichnet, daß die Hülle (27) aus Latex ist.

10. Selbsttrennender Leistungsschalter nach einem der Ansprüche 2 bis 9, dadurch gekennzeichnet, daß die kinematische Kette zwischen dem Steuerstift (30) und der Steuerwelle (38) einen Federmechanismus (53) zur Kompensation des Spiels enthält.

11. Selbsttrennender Leistungsschalter nach einem der Ansprüche 2 bis 9, dadurch gekennzeichnet, daß das Ende des Steuerstifts (30) einen rohrförmigen Endbereich (30A) enthält, in den der bewegliche Stift (22) eindringt, daß der bewegliche Stift (22) einen Schlitz (22A) aufweist, in den ein erster, den Steuerstift durchquerender Zapfen (22B) hineinragt, daß eine Feder (22C) sich an einer ersten Stützscheibe (22D) in Kontakt mit dem Ende des Steuerstifts (30) und gegen eine zweite Stützscheibe (22E) abstützt, die auf den beweglichen Stift (22) gesteckt ist und durch einen zweiten, den beweglichen Stift (22) durchquerenden Zapfen (22F) gehalten wird.

12. Selbsttrennender Leistungsschalter nach einem der Ansprüche 2 bis 11, dadurch gekennzeichnet, daß die mechanische Verbindung zwischen dem Metallrohr (25) und der Vakuumkammer und die elektrische Verbindung zwischen dem Metallrohr (25) und dem beweglichen Kontaktstift (22) mit Hilfe einer am zweiten Flansch (17) befestigten Manschette (15A), eines mit der Manschette (15A) und dem Metallrohr (25) fest verbundenen Rings (15B) und eines balg- oder ringförmigen Kontakts (15C) erfolgt, der sich in dem Ring befindet und den Stift (22) umgibt.

13. Selbsttrennender Leistungsschalter nach einem der Ansprüche 2 bis 10, dadurch gekennzeichnet, daß der bewegliche Stift (22) an den Steuerstift (30) angeschraubt ist und die elektrische Verbindung zwischen dem beweglichen Stift (22) und dem Metallrohr über einen Lamellenkontakt (15D) erfolgt, der auf dem beweglichen Stift (22) befestigt ist.

14. Selbsttrennender Leistungsschalter nach einem der Ansprüche 2 bis 10, dadurch gekennzeichnet, daß der Steuerstift von dem beweglichen Stift (22) der Vakuumkammer gebildet wird.

15. Selbsttrennender Leistungsschalter nach einem der Ansprüche 2 bis 14, dadurch gekennzeichnet, daß das Endstück (26) zwei Halbringe (41, 42) aufweist, die auf das Metallrohr aufgespannt sind und am Ende des zweiten Teils (10B) der isolierenden Traverse (10) anliegen.

16. Selbsttrennender Leistungsschalter nach Anspruch 15, dadurch gekennzeichnet, daß die Halbringe (41, 42) Zapfen (45) tragen, die mit Vertiefungen im zweiten Teil (10B) der isolierenden Traverse (10) zusammenwirken, um das Metallrohr (25) in Drehrichtung festzulegen.

17. Selbsttrennender Leistungsschalter nach einem der Ansprüche 6 bis 16, dadurch gekennzeichnet, daß die Hülle (27) in Translationsrichtung durch einen Klemmring (28) blockiert ist, der auf das Metallrohr (25) aufgesetzt ist.

18. Selbsttrennender Leistungsschalter nach einem der Ansprüche 2 bis 17, dadurch gekennzeichnet, daß eine Spule mit Magnetringkern auf den zweiten Teil (10B) der isolierenden Traverse in Höhe des Übergangs (10C) vom ersten (10A) zum zweiten Teil (10B) der isolierenden Traverse (10) aufgesetzt ist.

19. Selbsttrennender Leistungsschalter nach Anspruch 18, dadurch gekennzeichnet, daß die äußere Oberfläche des zweiten Teils (10B) der isolierenden Traverse (10) mit einer Metallbeschichtung (52) in Höhe der Wicklung (50) und des Metallprofils (4) versehen ist.

20. Selbsttrennender Leistungsschalter nach einem der Ansprüche 1 bis 19, dadurch gekennzeichnet, daß die Traverse in der Nähe des Übergangs (10C) ein Metallgitter (51) enthält, das beim Gießen eingebettet wird und auf das Potential des Metallrohrs (25) gebracht ist.

21. Selbsttrennender Leistungsschalter nach einem der Ansprüche 1 bis 20, dadurch gekennzeichnet, daß jede Traverse eine zweite Vakuumkammer (14A) enthält, die mit der ersten Vakuumkammer (14) in Reihe geschaltet ist, wobei die beweglichen Stifte der beiden Kammern Mittel (211, 212) zur gegenseitigen Befestigung aufweisen.

22. Mittelspannungszelle, dadurch gekennzeichnet, daß sie mindestens einen Leistungsschalter nach einem der Ansprüche 1 bis 21 enthält.

23. Mittelspannungszelle nach Anspruch 22, dadurch gekennzeichnet, daß der Leistungsschalter in einer Schublade (56) untergebracht ist, die in einem Kasten (55A) gleitet, wobei der Kasten Stützisolatoren (58) für einen Satz von Stromschienen (59) und Stützisolatoren (67) für einen Kabelabgang (65) aufweist und wobei der Leistungsschalter bei offenen Kontakten ganz in der Schublade Platz findet, die dann aus dem Kasten herausgezogen werden kann.

24. Mittelspannungszelle nach Anspruch 23, dadurch gekennzeichnet, daß der Kasten (55A) eine erste ortsfeste Klappe (61) enthält, die teilweise den die Stromschienen (59) enthaltenden Raum vom Raum für die Schublade (56) trennt.

25. Mittelspannungszelle nach den Ansprüchen 23 und 24, dadurch gekennzeichnet, daß der Kasten (55A) eine zweite bewegliche Klappe (61B) enthält, die eine Stellung oberhalb der ersten Klappe (61) einnimmt, wenn der Leistungsschalter in Betrieb ist, und in eine Stellung gelangt, in der sie vollständig zusammen mit der ersten Klappe (61) den Zugang zum Raum für die Stromschienen (59) vom Raum für die Schublade (56) verhindert, wenn der Leistungsschalter ausgeschaltet ist.

26. Zelle nach Anspruch 25, dadurch gekennzeichnet, daß die Bewegung der zweiten Klappe (61B) von einer Scheibe (61C) gewährleistet wird, die durch die Drehung des Metallprofils (4) mitgenommen wird und mindestens einen Gestängesatz (61F, 61G, 61H, 61I) betätigt, der mit der zweiten Klappe (61B) verbunden ist, die in am Kasten (55A) befestigten Gleitschienen (61A) gleitet.

27. Zelle nach Anspruch 26, dadurch gekennzeichnet, daß die Scheibe (61C) eine mit einem Rasthaken (61J) zusammenwirkende Kerbe (61K) enthält, um die Scheibe anzuhalten, wenn die Schublade herausgezogen ist, wobei der Rasthaken durch Betätigung der Schublade (56) entriegelt wird, wenn diese zurückgeschoben wird.

28. Zelle nach Anspruch 23, dadurch gekennzeichnet, daß sie eine erste Klappe (61L) enthält, die einen ersten Teil mit drei rechtwinkligen Abschnitten (61L1, 61L2, 61L3), die je einen Ausschnitt besitzen und über einen länglichen Abschnitt (61M) mit Längsschlitzen (61N) miteinander verbunden sind, und einen zweiten Teil mit drei rechtwinkligen Abschnitten (61L1', 61L2', 61L3') aufweist, die je einen Ausschnitt besitzen und über einen länglichen Bereich (61M') mit Zapfen (61P), die in die Schlitze (61N) eingreifen, miteinander verbunden sind, wobei die Teile durch eine Feder gegeneinander gezogen werden, daß die Zelle eine zur ersten Klappe (61L) parallele zweite Klappe (61R) enthält, die einen ersten Teil mit drei rechtwinkligen Abschnitten (61R1, 61R2, 61R3), die über einen Abschnitt mit Längsschlitzen miteinander verbunden sind, und einen zweiten Teil mit drei rechtwinkligen Abschnitten (61R1', 61R2', 61R3') aufweist, die über längliche Abschnitte mit Schlitzen verbunden sind, in die die Zapfen (61P) eingreifen, wobei die Teile durch Federn (61S) zueinander gezogen werden, und daß die beiden Klappen zueinander parallel angeordnet sind und durch die Bewegung der Pole oder durch einen mit der Bewegung der Pole verbundenen Mechanismus betätigt werden.

29. Zelle nach einem der Ansprüche 23 bis 28, dadurch gekennzeichnet, daß die Schublade (56) ein Verschlußorgan (62) aufweist, das durch die Drehung des Leistungsschalters beim Übergang von der eingeschalteten in die ausgeschaltete Stellung und umgekehrt gedreht wird und die Pole erdet, wenn der Leistungsschalter ausgeschaltet ist.

30. Mittelspannungszelle nach einem der Ansprüche 23 bis 29, dadurch gekennzeichnet, daß die Drehung des Metallprofils (4) durch einen Getriebemotor (78) bewirkt wird, der an der Schublade (56) befestigt ist und mit einem mit dem Metallprofil (4) fest verbundenen Ritzel (77) zusammenwirkt.

31. Mittelspannungszelle, dadurch gekennzeichnet, daß sie zwei Stromschienensätze (90A, 90B, 90C; 91A, 91B, 91C), einen Kabelabgang (110A, 110B, 110C) und zwei je mit einem Leistungsschalter nach einem der Ansprüche 1 bis 21 versehene Schubladen besitzt, wobei die kabelseitigen Enden der Leistungsschalter Pol für Pol verbunden sind und die beiden Leistungsschalter je ein Metallprofil (96, 97) aufweisen, das je einem Steuerkasten (98, 99) zugeordnet ist.

32. Mittelspannungszelle nach einem der Ansprüche 22 bis 31, dadurch gekennzeichnet, daß jeder Pol eines Leistungsschalters zwei Traversen gemäß einem der Ansprüche 1 bis 10 aufweist, die elektrisch parallelgeschaltet sind.

33. Mittelspannungszelle, dadurch gekennzeichnet, daß sie einen Leistungsschalter nach einem der Ansprüche 1 bis 21 enthält, wobei jeder Pol (161) in Reihe mit einem Stromtransformator (162) liegt, der im wesentlichen die gleiche äußere Form und das gleiche Volumen wie ein Pol besitzt und bezüglich des Pols um 180° gedreht angeordnet ist sowie auf dem gemeinsamen Metallprofil (161B) der Pole des Leistungsschalters sitzt.

34. Mittelspannungszelle nach einem der Ansprüche 23 bis 33, dadurch gekennzeichnet, daß sie einen Erdschalter (70) besitzt, der die durch den Leistungsschalter geschützten Abgangskanäle an Erde legt.

35. Zelle nach Anspruch 34, dadurch gekennzeichnet, daß der Erdschalter (701, 702, 703) einpolige elektromagnetische Steuerungen besitzt.

36. Mittelspannungszelle, dadurch gekennzeichnet, daß sie einen Leistungsschalter (751) nach einem der Ansprüche 1 bis 21, einen Stromschienensatz (752) und einen Kabelabgang (753) besitzt, wobei die Kabel insgesamt über den Leistungsschalter mit Hilfe eines Bügels (755) geerdet werden können, der die oberen Klemmen (751A) des Leistungsschalters kurzschließt und durch Kontakt mit der Schublade (750) des Leistungsschalters und mit Hilfe von drei Verlängerungsleitern (754) erdet, die den Kontakt zwischen den unteren Klemmen (751B) des Leistungsschalters und den Kabelabgängen herstellen.

37. Zelle nach Anspruch 36, dadurch gekennzeichnet, daß die Stromschienen geerdet werden, indem die Aufgaben des Bügels (755) und der Verlängerungsleiter (754) vertauscht werden.

38. Zelle nach einem der Ansprüche 36 und 37, dadurch gekennzeichnet, daß der Bügel elektrische und mechanische Anschläge (764) zur Begrenzung des Drehhubs der Schublade (750) aufweist.

39. Mittelspannungszelle, dadurch gekennzeichnet, daß sie zwei Schubladen (801 und 802) aufweist, die übereinander angeordnet sind und je einem Leistungsschalter (811, 812) gemäß einem der Ansprüche 1 bis 21 zugeordnet sind, die mit einem gemeinsamen Stromschienensatz (813) zusammenwirken, der sich zwischen den beiden Schubladen befindet.

40. Zelle nach Anspruch 39, dadurch gekennzeichnet, daß die Kabel (816) des oberen Leistungsschalters (811) durch eine erste Rinne (815') verlaufen, die hinter einem der Zelle benachbarten Abteil (815) verlaufen.

41. Zelle nach Anspruch 40, dadurch gekennzeichnet, daß das Abteil (815) zwei abnehmbare Niederspannungskästen aufweist, die Schutzrelais und alle für den Betrieb der Leistungsschalter erforderlichen Hilfseinrichtungen enthalten.

42. Zelle nach einem der Ansprüche 40 und 41, dadurch gekennzeichnet, daß vor dem Abteil (815) eine zweite Rinne liegt, die die mehradrigen Kabel für die Fernsteuerung oder Fernmeldung enthält.

43. Zelle nach einem der Ansprüche 40 bis 42, dadurch gekennzeichnet, daß der Stromschienensatz (813) in das Abteil über eine Manschette (818) zum Durchlaß der Stromschienen eindringt.

44. Zelle nach Anspruch 43, dadurch gekennzeichnet, daß der vor der Manschette für den Durchlaß der Stromschienen (818) im Abteil vorhandene Raum für Anschlüsse verwendet wird, insbesondere für die Anschlüsse der mehradrigen Kabel zur Fernsteuerung oder zur Verbindung zwischen den Zellen.

45. Kontaktzelle, dadurch gekennzeichnet, daß sie einen Leistungsschalter nach einem der Ansprüche 1 bis 21 enthält.

46. Mittelspannungsstation, dadurch gekennzeichnet, daß sie eine im wesentlichen parallelepipedische Struktur aus einem feuerfesten Baumaterial enthält, die mehrere Abteile (901, 902, 903) mit je einem Leistungsschalter nach einem der Ansprüche 1 bis 21 enthält, wobei jedes Abteil einem Raum (901A, 902A, 903A) zugeordnet ist, der Niederspannungsapparate für den Betrieb der Leistungsschalter sowie für die Fernsteuerung und Fernmeldung enthält, wobei die Abteile und Räume unter einer Decke (905) liegen, die mit einem Dach (906) einen Speicherraum (907) definiert, in dem ein Schienensatz (908) liegt, der für die Leistungsschalter, mit denen die Stromschienen über isolierende Traversen (931, 932, 933) zusammenwirken, gemeinsam vorgesehen ist, und daß die Station an der Vorderseite einen Gang (917) enthält, wobei die Abgangskabel (951, 952, 953) durch Schächte im Sockel (910) der Station verlaufen.

## Claims

1. A multipolar isolating circuit-breaker comprising, for each pole (1, 2, 3): an insulating feedthrough (10) containing a vacuum bottle (14) including a fixed contact (18) and a moving contact (21), the feedthrough including a first contact (20) at a first end connected to a first terminal of the bottle and designed to co-operate with an inlet conductor, and a second contact (48) at a second end connected to a second terminal of the bottle and designed to co-operate with an outlet conductor, the circuit-breaker being characterized in that the feedthroughs are fixed to a metal bar (4) having a drive shaft (38) common to the bottles running therealong and protected thereby, the shaft being actuated by bottle drive control means for the moving contacts, said means being contained in a box (5) secured to the bar, said bar (4) being mounted to rotate about its own length direction to perform the section-switching function.

2. An isolating circuit-breaker according to claim 1, characterized in that each pole comprises an insulating feedthrough (10) comprising a first portion (10A) containing the vacuum "bottle" (14), said vacuum bottle including an insulating case (15) closed by first and second metal endplates (16, 17), the first metal endplate (16) carrying a first jaw terminal (20) outside the case and said fixed contact (18) inside the case, the second endplate (17) having a moving metal rod (22) carrying said moving contact (21) passing therethrough in sealed manner, the insulating feedthrough including a cylindrical second portion (10B) inside which a metal tube (25) is coaxially disposed and is mechanically connected to the vacuum bottle, and is electrically connected to said moving metal rod (22), said tube (25) containing a control rod (30) connected to said moving metal rod (22), the insulating feedthroughs of the various poles being fixed to said metal bar (4) substantially where the first and second portions (10A, 10B) of each feedthrough meet, the control rod (30) for each pole being mechanically connected to said control shaft (38) by a lever (32) hinged on an endpiece (36) secured to the metal tube (25), an insulating arm (35, 32A) hinged at one end to said lever (32) and at a second end to a crank (37, 38B) connected to said shaft, said endpiece (26) being mechanically and electrically connected to said metal tube (25) and constituting a second jaw terminal (48).

3. An isolating circuit-breaker according to claim 1 or 2, characterized in that the drive shaft (38) is a rotary shaft.

4. An isolating circuit-breaker according to claim 1 or 2, characterized in that the drive shaft (38) is a shaft which is displaced in translation along its axis.

5. An isolating circuit-breaker according to any one of claims 2 to 4, characterized in that said first portion (10A) of said insulating feedthrough (10) includes inside grooves (12) that are parallel to the axis of the feedthrough and that co-operate with the outside wall of the vacuum bottle to define ventilation channels, air flowing through the metal tube (25) and penetrating into said channels via holes (25A) through said tube.

6. An isolating circuit-breaker according to any one of claims 2 to 4, characterized in that the vacuum bottle 514) is placed in a cylindrical resin cage (13) disposed inside said first portion (10A) of the feedthrough (10).

7. An isolating circuit-breaker according to claim 6, characterized in that said resin cage (13) includes inside grooves (13A) parallel to its axis, co-operating with the wall of the vacuum bottle (14) to define ventilation channels, air flowing along the metal tube (25) and penetrating into said channels via holes (25A) in said tube.

8. An isolating circuit-breaker according to any one of claims 2 to 7, characterized in that the dielectric strength between said metal tube (25) and said second portion (10B) of the isolating feedthrough is provided by a sheath (27) of compressible insulating material slid over said metal tube (25) and engaged in said second portion (10B), assembly being facilitated by using an insulating grease.

9. An isolating circuit-breaker according to claim 8, characterized in that said sheath (27) is made of latex.

10. An isolating circuit-breaker according to any one of claims 2 to 9, characterized in that the moving parts between said control rod (30) and said control shaft (38) include a sprung backlash take-up mechanism (53).

11. An isolating circuit-breaker according to any one of claims 2 to 9, characterized in that the end of the control rod (30) includes a tubular end portion (30A) in which said moving rod (22) is engaged, said moving rod (22) having a slot (22A) in which a first pin (22B) is engaged that passes through said control rod, a spring (22C) bearing against a first thrust washer (22D) in contact with said end of the control rod (30), and against a second thrust washer (22E) engaged in the moving rod (22) and held by a second pin (22F) that passes through the moving rod (22).

12. An isolating circuit-breaker according to any one of claims 2 to 11, characterized in that the mechanical connection between said metal tube (25) and the vacuum bottle, and the electrical connection between said metal tube (25) and said moving contact rod (22) is provided by means of a sleeve (15A) fixed to said second endplate (17), a ring (15B) secured to said sleeve (15A) and to said tube (25), and a ring or concertina-type contact (15C) disposed inside said ring and surrounding said rod (22).

13. An isolating circuit-breaker according to any one of claims 2 to 10, characterized in that the moving rod (22) is screwed to the control rod (30), electrical connection between the moving rod (22) and the metal tube being provided by a set of contact springs (15D) fixed on said moving rod (22).

14. An isolating circuit-breaker according to any one of claims 2 to 10, characterized in that the control rod is constituted by the moving rod (22) of the vacuum bottle.

15. An isolating circuit-breaker according to any one of claims 2 to 14, characterized in that said endpiece (26) comprises two half-collars (41, 42) clamped on said metal tube and in abutment against the end of said second portion (10B) of the insulating feedthrough (10).

16. An isolating circuit-breaker according to claim 15, characterized in that the half-collars (41, 42) include studs (45) that co-operate with recess formed in said second portion (10B) of the insulating feedthrough (10) to prevent said metal tube (25) from rotating.

17. An isolating circuit-breaker according to any one of claims 6 to 16, characterized in that said sheath (27) is prevented from moving in translation by a spring clip (28) clamped on said metal tube (25).

18. An isolating circuit-breaker according to any one of claims 2 to 17, characterized in that a coil having a closed toroidal metal core (50) is slid over said second portion (10B) of the insulating feedthrough, level with the throat (10C) interconnected said first and second portions (10A, 10B) of the insulating feedthrough (10).

19. An isolating circuit-breaker according to claim 18, characterized in that the outside surface of the second portion (10B) of the insulating feedthrough (10) is metal coated (52) level with said coil (50) and the support bar (4).

20. An isolating circuit-breaker according to any one of claims 1 to 19, characterized in that in the vicinity of the throat (10C) the feedthrough includes a metal grid (51A) integrally molded therewith and put to the same potential as said metal tube (25).

21. An isolation circuit-breaker according to any one of claims 1 to 20, characterized in that each feedthrough includes a second vacuum bottle (14A) connected in series with the first vacuum bottle (14), the moving rods of the two bottles including means (211, 212) for connecting them together.

22. An medium-tension bay, characterized in that it includes at least one isolating circuit-breaker according to any one of claims 1 to 21.

23. A medium-tension bay according to claim 22, characterized in that the isolating circuit-breaker is placed in a drawer (56) that slides in a chest (55A) including supporting insulators (58) for a set of busbars (59) and supporting insulators (67) for cable outlets (65), said isolating circuit breaker being capable, in its section switch disengaged position of being contained completely within the drawer and of being extracted from the chest.

24. A medium-tension bay according to claim 23, characterized in that the chest (55A) includes a fixed first flap (61) separating the space containing the busbars (59) and the space for the drawer (56), in part.

25. A medium-tension bay according to claims 23 and 24, characterized in that the chest (55A) includes a moving second flap (61B) which, when the circuit-breaker is in operation, occupies a position above the first flap (61) and which, when the circuit-breaker is placed in its isolating position, takes up a position where it co-operates with the first flap (61) to completely prevent access to the busbar space from the drawer space.

26. A bay according to claim 25, characterized in that the second flap (61B) is moved by a disk (61C) rotated by rotating the bar (4), thereby actuating at least one linkage (61F, 61G, 61H, 61I) connected to said second flap (61B) which slides in slideways (61A) fixed to the chest (55A).

27. A bay according to claim 26, characterized in that the disk (61C) includes a notch (61K) co-operating with a catch (61J) for locking the disk when the drawer is pulled out, the catch being unlocked by the drawer (56) when the drawer is pushed back in.

28. A bay according to claim 23, characterized in that it includes a first flap (61L) having a first portion including three rectangular pieces (61L1, 61L2, 61L3) each provided with a notch and connected to an elongate piece (61M) provided with oblong slots (61N), and a second portion comprising three rectangular pieces (61L1', 61L2', 61L3') each provided with a notch and connected together by an elongate piece (61M') provided with studs (61P) engaging in the slots (61N), the portions being urged towards each other by a spring, the bay including a second flap (61R) parallel to the first flap (61L) and comprising a first portion having three rectangular pieces (61R1, 61R2, 61R3) connected together by a piece provided with oblong slots, and a second portion comprising three rectangular pieces (61R1', 61R2', 61R3') connected together by an elongate piece provided with slots in which said studs (61P) are engaged, said portions being urged towards each other by springs (61S), the two flaps being disposed parallel to each other and being driven by the movement of the poles or by a mechanism that is linked to the movement of the poles.

29. A bay according to any one of claims 23 to 28, characterized in that the drawer (56) includes a shutter (62) rotated by rotation of the insulating circuit-breaker on passing from its non-isolating position to its isolating position, and vice versa, and grounding its poles when the isolating circuit-breaker is in its isolating position.

30. A medium-tension bay according to any one of claims 23 to 29, characterized in that the metal bar (4) is rotated by a motor and stepdown gear chest unit (78) fixed on the drawer (56) and co-operating with a gear wheel (77) secured to the bar (4).

31. A medium-tension bay characterized in that it includes two sets of busbars (90A, 90B, 90C; 91A, 91B, 91C), a cable outlet (110A, 110B, 110C), and two drawers, each fitted with its own isolating circuit-breaker according to any one of claims 1 to 21, the ends of the isolating circuit-breakers adjacent to the cables being connected together in pairs by pole, the two isolating circuit-breakers having respective supporting metal bars (96, 97) each associated with a respective control box (98, 99).

32. A medium-tension bay according to any one of claims 22 to 31, characterized in that each pole of an isolating circuit breaker comprises two feedthroughs (111, 112) according to any one of claims 1 to 10 which are connected electrically in parallel.

33. A medium-tension bay characterized in that it includes an isolating circuit-breaker according to any one of claims 1 to 21, with each pole (161) being in series with a current transformer (162) whose outside shape is substantially the same and whose volume is substantially the same as a pole, which transformer is disposed head to tail relative to the pole and is fixed on the common support metal bar (161B) for the poles of the isolating circuit-breaker.

34. A medium-tension bay according to any one of claims 23 to 33, characterized in that it includes a grounding section switch (70) serving to ground the outlet cables that are protected by the isolating circuit-breaker.

35. A bay according to claim 34, characterized in that the grounding section switch (701, 702, 703) includes single pole electromagnetic controls.

36. A medium-tension bay characterized in that it includes an isolating circuit-breaker according to any one of claims 1 to 21, a set of busbars (752), and a set of cable outlets (753), said cables being capable of being integrally grounded via the circuit-breaker by means of a bracket (755) that short circuits the top jaw terminals (751A) of the circuit-breaker and that puts them to ground potential by making contact with the drawer (750) which is at circuit-breaker ground, and by means of three extender conductors (754) making contact between the bottom jaw terminals (751B) of the circuit-breaker and the cable outlets.

37. A bay according to claim 36, characterized in that the bus bars are grounded by reversing the respective functions of the bracket (755) and of the extender conductors (754).

38. A bay according to claim 36 or 37, characterized in that the bracket includes electrical and mechanical abutments (764) for limiting the rotary stroke of the drawer (750).

39. A medium-tension bay characterized in that it includes two drawers (801, 802) disposed one above the other, each associated with a respective isolating circuit-breaker (811, 812) according to any one of claims 1 to 21, the isolating circuit-breakers co-operating with a common set of busbars (813) disposed between the two drawers.

40. A bay according to claim 39, characterized in that the cables (816) of the top isolating circuit-breaker (811) pass through a first chute (815') disposed at the back of a compartment (815) adjacent to the bay.

41. A bay according to claim 40, characterized in that the compartment (815) includes two removable low tension chests containing protection relays and all of the auxiliary equipment required for operating the isolating circuit-breakers.

42. A bay according to claim 40 or 41, characterized in that the front of said compartment (815) has a second chute placed thereat containing multiconductor cables for remote control or for remote signalling.

43. A bay according to any one of claims 40 to 42, characterized in that the set of busbars (813) penetrates into said compartment via a bar-passing sleeve (818).

44. A bay according to claim 43, characterized in that the space in the compartment in front of said bar-passing sleeve (818) is used as a connecting space, in particular for the multiconductor remote control cables or for providing connections between bays.

45. A contactor bay characterized in that it includes an isolating circuit-breaker according to any one of claims 1 to 21.

46. A medium-tension station characterized in that it comprises a substantially rectangular structure made of fire-resistant building material, said structure comprising a plurality of compartments (901, 902, 903) each containing an isolating circuit-breaker according to any one of claims 1 to 21, each compartment being associated with a cell (901A, 902A, 903A) containing low tension apparatus for operating the isolating circuit-breakers and for remote control and remote signalling purposes, the compartments and the cells having a ceiling (905) overlying them and co-operating with a roof (906) to define a compartment (907) in which a set of busbars (908) is placed that is common to the isolating circuit-breakers with which the busbars co-operate by means of insulating feedthroughs (931, 932, 933), the station including a passage (917) at its front face, with the outlet cables (951, 952, 953) passing in cableways formed in the base (910) of the station.
